# EUROPÄISCHE PATENTSCHRIFT

(11) **EP 2 375 115 B1**
(45) Veröffentlichungstag und Bekanntmachung des Hinweises auf die Patenterteilung: **27.04.2016**
(21) Anmeldenummer: 11002107.8
(22) Anmeldetag: 14.03.2011
(51) Int. Cl.: F16K 31/06, F16K 37/00

(54) **Magnetbetätiges Mehrweghydraulikventil**
Magnetically actuated manifold hydraulic valve
Soupape hydraulique à plusieurs voies pouvant être actionnée par aimant

(30) Priorität: 07.04.2010 DE 102010014069
(43) Veröffentlichungstag der Anmeldung: 12.10.2011
(73) Patentinhaber: MOOG GmbH, D-71034 Böblingen (DE)
(72) Erfinder: Boes, Christoph, 72768 Reutlingen (DE); Hirschberger, Dirk, 75382 Althengstett (DE)
(74) Vertreter: Wittmann, Ernst-Ulrich

(56) Entgegenhaltungen:
- EP-A1- 1 253 363
- EP-A2- 0 366 960
- GB-A- 2 217 917
- US-A1- 2001 029 985
- US-A1- 2002 153 045
- US-A1- 2003 131 896

## Beschreibung

Die Erfindung betrifft ein magnetbetätigtes Mehrwegehydraulikventil mit Mittenzentrierung, umfassend einen Ventilblock mit einer ersten Verbindungsseite und einer am Ventilblock gegenüberliegend angeordneten zweiten Verbindungsseite; einen im Ventilblock verschiebbar geführten Ventilkolben; eine Wegmesssystemeinheit zur Lagebestimmung des Ventilkolbens und eine Doppelhubmagneteinheit, die am Ventilblock an der ersten Verbindungsseite angebracht ist. Weiter steht die Doppelhubmagneteinheit mittels einer Verbindungsstange mit dem Ventilkolben in Wirkkontakt und ist mittels der Doppelhubmagneteinheit sowohl in eine Richtung als auch in eine andere entgegensetzte Richtung aus einer Mittelstellung bewegbar. Die Mittenzentrierung umfasst eine erste Zentrierfeder, die sich mit einem Endbereich an der Doppelhubmagneteinheit und mit einem anderen Endbereich am Ventilkolben abstützt, sowie eine zweite Zentrierfeder, wobei die Wegmesssystemeinheit an der der Doppelhubmagneteinheit gegenüberliegenden zweiten Verbindungsseite am Ventilblock angebracht ist und die zweite Zentrierfeder sich mit einem Endbereich an der Wegmesssystemeinheit und mit einem anderen Endbereich am Ventilkolben abstützt, und sich eine Verlängerung des Ventilkolbens in die Wegmesssystemeinheit hinein erstreckt und mit dieser in Wirkkontakt steht.

Derartige Mehrwegehydraulikventile können zur Steuerung einer Vielzahl von hydraulischen Geräten bzw. Maschinen eingesetzt werden. Sie dienen dazu, den Weg für ein Arbeitsmedium (i.d.R. Hydraulikfluid) freizugeben, zu sperren oder die Durchflussrichtung und -menge zu ändern. Ein beispielhafter Anwendungsfall wäre die Steuerung der Ausfahrrichtung, -länge und -geschwindigkeit eines Hydraulikzylinders. Hierzu weisen bekannte Wegeventile einen Ventilblock mit einem darin verschiebbar geführten Ventilkolben auf. Der Ventilkolben weist Steuerkanten auf, mittels derer Fluidverbindungen zwischen im Ventilblock angeordneten Hydraulikkanälen hergestellt werden können. Die Bewegung des Ventilkolbens erfolgt durch ein Aktuatorelement. Häufig werden auch Systeme zur Positionsbestimmung des Ventilkolbens vorgesehen.
Aus der EP 0872857 ist ein gattungsbildendes magnetbetätigtes Mehrwegehydraulikventil bekannt. An einem Ventilgehäuse, welches einen Ventilkolben beherbergt, schließt sich zur einen Stirnseite eine mechanische Rückstelleinrichtung mit einer Feder an. Auf der hiervon gegenüberliegenden Seite des Ventilgehäuses ist ein Doppelhubmagnet angeordnet. Der Anker des Doppelhubmagneten ist mit dem Ventilkolben über einen Stößel verbunden. Eine weitere Feder der mechanischen Rückstelleinrichtung stützt sich am Doppelhubmagneten ab und wirkt auf den Ventilkolben, entgegengesetzt zur anderen Feder. Innerhalb des Doppelhubmagneten ist ein Sensorelement angeordnet, welches den magnetischen Fluss misst. Hierdurch lässt sich eine kontrollierte Übererregung der Magnetkreise mit zeitoptimaler Stromabsenkung erreichen. Ferner ist es möglich, die Änderung des Sensorsignals über den Magnethub zur Generierung eines Wegsignals zu nutzen. Nachteilig an dieser Anordnung ist, dass für Reparaturarbeiten eine vollständige Demontage des Doppelhubmagneten erfolgen muss. Zudem kann die Ableitung des Wegsignals bzw. der Positionsbestimmung aus der Flussmessung der Magneten unpräzise sein. Die Tatsache, dass magnetische Aktuatoren im Dauerbetrieb zu Erwärmung neigen, kann außerdem die Lebensdauer des Sensorelements negativ beeinflussen. Weiterhin sind im Stand der Technik Hydraulikventile bekannt, die Linearmotoren nutzen. Beispielsweise kann zu einer Seite eines Ventilblocks ein Wegaufnehmer angeordnet sein, dessen bewegliches Sensorelement mit dem Ventilkolben in Kontakt steht und dessen Bewegung von einem Signalempfänger überwacht wird. Hierüber wird die Bewegung des Ventilkolbens abgeleitet. Zur anderen Seite des Ventilkolbens ist der Linearmotor angebracht, wobei der Anker des Linearmotors mit dem Steuerkolben verbunden ist. Zu beiden Seiten des Ankers des Linearmotors sind Federn angeordnet, die den Linearmotor und den Steuerkolben in eine Mittelposition bewegen.

Allerdings ist der Zusammenbau des Linearmotors und des Steuerkolbens durch die gewählte Konstruktion bzw. Anordnung kompliziert und aufwendig.

Ein magnetbetätigtes Mehrwegehydraulikventil dieser Art ist aus dem Dokument GB 2217917 bereits bekannt.

Es ist deshalb Aufgabe der vorliegenden Erfindung, bekannte magnetbetätigte Mehrwegehydraulikventile hinsichtlich ihrer Funktionalität und Montagefreundlichkeit zu verbessern.

Hierzu ist erfindungsgemäß vorgesehen, dass der Ventilkolben mittels der Doppelhubmagneteinheit sowohl in eine Richtung durch Bestromung einer ersten Spule als auch in eine andere entgegengesetzte Richtung durch Bestromung einer zweiten Spule aus einer Mittelstellung bewegbar ist.

Das magnetbetätigte Mehrwegehydraulikventil ist also derart aufgebaut, dass zentral ein Ventilblock angeordnet ist, dessen beide Stirnseiten eine erste und zweite Verbindungsseite bilden, wobei an der ersten Verbindungsseite eine Doppelhubmagneteinheit und an der zweiten Verbindungsseite, die der ersten Verbindungsseite am Ventilblock diametral gegenüberliegt, eine Wegmesssystemeinheit angeordnet ist. Die Wegmesssystemeinheit ist demnach getrennt von der Doppelhubmagneteinheit positioniert, so dass keine störenden magnetischen Einflüsse auf die Wegmesssystemeinheit wirken können. Zudem kann eine Erwärmung der Doppelhubmagneteinheit keine Beeinflussung der Wegmesssystemeinheit hervorrufen. Die Anordnung der ersten und zweiten Zentrierfedern jeweils zwischen dem Ventilblock und der Wegmesssystemeinheit bzw. zwischen Ventilblock und Doppelhubmagneteinheit erleichtert den Zusammenbau.

Eine erfindungsgemäße Weiterbildung des magnetbetätigten Mehrwegehydraulikventils kann darin bestehen, einen ersten Federteller zwischen der ersten Zentrierfeder und dem Ventilkolben zu positionieren und einen zweiten Federteller zwischen der zweiten Zentrierfeder und dem Ventilkolben zu positionieren. Dies hat den Vorteil, dass am Ventilkolben keine speziellen Kontaktflächen für die Zentrierfedern vorgesehen werden müssen. Auch kann durch die Federteller eine größere Auflagefläche am Kolben geschaffen werden, was eine verbesserte Krafteinleitung ermöglicht.

Weiter kann vorgesehen sein, dass mindestens einer der ersten und zweiten Federteller in der Mittelstellung des Ventilkolbens mit einer ersten und/oder zweiten Anschlagfläche des Ventilblocks in Kontakt steht. Der Ventilblock weist hierzu Anschlagflächen auf, die bei einer Mittelstellung des Ventilkolbens mit mindestens einer dessen Stirnseiten bündig abschließen. Die Federteller sind dabei derart ausgestaltet, dass diese sowohl die Stirnseiten des Ventilkolbens, als auch die daran benachbart anschließenden Anschlagflächen kontaktieren können. Hierdurch ist gewährleistet, dass der Ventilkolben mittels der Zentrierfedern genau in der Mittelposition gehalten wird. Sollte eine der beiden Zentrierfedern eine größere Kraft auf den Ventilkolben ausüben, so könnte dies ohne entsprechende Anschlagflächen und entsprechend ausgestaltete Federteller dazu führen, dass der Ventilkolben durch die stärkere Feder aus der Mittelposition herausgeschoben wird. Mittels der Anschlagflächen und der entsprechend ausgestalteten Federteller wird die Kraft der stärkeren Feder jedoch über die Anschlagfläche aufgenommen und der Ventilkolben weiterhin in seiner Mittelposition gehalten. Dies ist insbesondere wichtig, da die Mittelstellung des Ventilkolbens in der Regel die sogenannte sichere Position darstellt. Im Fall eines Stromausfalls muss gewährleistet sein, dass hydraulische Maschinen keine unkontrollierten Bewegungen ausführen. Der Ventilkolben wird hierzu in der Regel durch Federn in die sichere Position gebracht, wodurch z.B. die Zu- und Rückleitungen zu hydraulischen Aktuatoren blockiert werden und die Aktuatoren in ihrer Position gehalten werden. Mit der gewählten Anordnung kann sichergestellt werden, dass die sichere Stellung zuverlässig eingenommen wird.

Eine weitere Ausgestaltung für das magnetbetätigte Mehrwegehydraulikventil besteht darin, dass die Wegmesssystemeinheit eine Wegmesssystembasis mit einer Aufnahmeöffnung aufweist, in der zumindest teilweise ein Signalempfänger aufgenommen ist. Die Wegmesssystembasis dient dabei als Trägerelement für einen Signalempfänger. Der Signalempfänger ist deshalb nicht mehr direkt am Ventilblock angeordnet, sondern montagefreundlich auf einem separaten Trägerelement.

Ein weiterer Vorteil ergibt sich, wenn die Wegmesssystemeinheit ein Druckrohr umfasst, die Verlängerung sich in das Druckrohr hineinerstreckt und an der Verlängerung ein Signalgeber angeordnet ist, wobei sich der Signalgeber in das Druckrohr erstreckt. Mittels des Druckrohrs wird eine Führung für die Verlängerung und den Signalgeber bereitgestellt.

Denkbar ist auch, dass der Signalgeber an einem Endbereich der Verlängerung befestigt ist. Hierdurch ist eine kompakte Ausgestaltung der Wegmesssystemeinheit möglich. Zudem ist auf diese Weise sichergestellt, dass die Verlängerung keine störenden Einflüsse auf die Wegmessung hat.

Weiter kann vorgesehen sein, dass sich das Druckrohr durch die Aufnahmeöffnung der Wegmesssystembasis erstreckt und ein auf das Druckrohr aufgeschobener Signalempfänger mittels des Druckrohrs in der Aufnahmeöffnung zentriert ist. Zur einwandfreien Funktion des Wegmesssystems ist es notwendig, Signalempfänger und Signalgeber zueinander in optimaler Weise auszurichten. Unter Nutzung des Druckrohrs, auf die der Signalempfänger aufgeschoben wird und der Anordnung des Signalgebers im Druckrohr, ergibt sich eine optimale koaxiale Ausrichtung zueinander. Weiterhin sorgt diese Anordnung auch dafür, dass der Signalempfänger in der in der Wegmesssystembasis gebildeten Aufnahmeöffnung zentriert angeordnet ist. Dies vereinfacht die spätere Montage weiterer Elemente der Wegmesssystemeinheit. Die Anordnung des Signalempfängers außerhalb des Druckrohrs sowie des Signalgebers innerhalb des Druckrohrs bietet zudem die Möglichkeit, das Hülseninnere mit Hydraulikfluid zu füllen. Auch kann dadurch auf eine aufwändige Abdichtung des Signalgebers zum Hydraulikfluid führenden Teil des Hydraulikventils verzichtet werden. Das Aufschieben des Signalempfängers auf das Druckrohr bietet ferner der Vorteil, dass zwar einerseits eine räumliche Trennung von Signalgeber und Signalempfänger gegeben ist, wodurch der Signalempfänger nicht mit Hydraulikfluid in Verbindung kommt, dennoch aber eine gute Signalübertragung vom Signalgeber zum Signalempfänger durch die geringe räumliche Entfernung gegeben ist.

Eine weitere Möglichkeit zur Ausbildung des magnetbetätigten Mehrwegehydraulikventils besteht darin, dass der auf das Druckrohr aufgeschobene Signalempfänger lösbar mit dem Druckrohr verbunden ist. Da der Signalempfänger nicht mit dem Hydraulikfluid in Verbindung steht, welches sich lediglich im Inneren des Druckrohrs befindet, besteht die Möglichkeit, im Falle des Ausfalls des Signalempfängers, diesen auf einfache Weise vom Druckrohr zu lösen und zu reparieren bzw. auszutauschen. Es ist deshalb nicht die vollständige Demontage der Wegmesssystemeinheit bzw. die vollständige Demontage des Hydraulikventils notwendig. Dies erleichtert Wartungs- und Reparaturarbeiten und führt damit zu einer Kostenersparnis.

Ferner ist denkbar, dass die Wegmesssystembasis, an der der zweiten Verbindungsseite des Ventilblocks zugewandeten Seite eine Anlagefläche aufweist, die mit der zweiten Zentrierfeder in Kontakt steht und sich an die Anlagefläche ein Bund für einen Druckrohrflansch und eine sich durch den Bund zur Aufnahmeöffnung erstreckende Druckrohrdurchführung anschließt. Die zweite Zentrierfeder stützt sich demnach zur einen Seite am Ventilblock bzw. am Federteller und dem Ventilkolben ab sowie zur anderen Seite an der Anlagefläche der Wegmesssystembasis. Bei der Montage der Wegmesssystembasis am Ventilblock kann die Zentrierfeder deshalb einfach zwischen Ventilblock und Wegmesssystembasis eingelegt werden. Mittels des Bunds für den Druckrohrflansch und der hierdurch verlaufenden Druckrohrdurchführung wird es ermöglicht, das Druckrohr von der der zweiten Verbindungsseite zugewandten Seite der Wegmesssystembasis durch die Wegmesssystembasis hindurchzuführen und insbesondere einzupressen. Das Druckrohr kommt dabei mit der Außenwand der Druckrohrdurchführung in Kontakt und bildet zusammen mit dieser eine Abdichtung gegen das Hydraulikfluid.

Es kann vorgesehen sein, dass die Doppelhubmagneteinheit einen Anker aufweist, die Verbindungsstange eine Endanschlagfläche und einen Ventilkolbenanschlag aufweist, die Endanschlagfläche mit dem Anker in Kontakt steht und der Ventilkolbenanschlag mit dem Ventilkolben in Kontakt steht, wobei ein Abstand zwischen Endanschlagfläche und Ventilkolbenanschlag derart gewählt ist, dass sich der Anker in einer Mittelposition befindet wenn sich auch der Ventilkolben in einer Mittelposition befindet, und umgekehrt. Mit Hilfe dieser Ausgestaltung wird es auf einfache Weise ermöglicht die Mittelpositionen von Ventilkolben und Anker aufeinander abzustimmen. Aufwändige und komplizierte Einstellarbeiten am Hydraulikventil können damit entfallen. Ebenso kann somit der Proportionalitätsbereich des Doppelhubmagneten optimal ausgenutzt werden. Bisher war es bei Hydraulikventilen des Stands der Technik üblich, dass nach der Fertigung die sog. Nullpunktabstimmung für jedes Ventil durchgeführt werden musste. Dies kann nun entfallen, da bereits beim Zusammenbau des Ventils mittels der Verbindungsstange die notwendige Abstimmung erfolgt. Die Merkmalskombination des Anspruchs 10 stellt auch unabhängig von den Merkmalen des Anspruchs 1 eine eigene Erfindung dar und kann somit Gegenstand einer Teilungsanmeldung werden.

Eine vorteilhafte Weiterbildung ergibt sich, wenn der Anker mit der Verbindungsstange verbunden ist, sich eine Durchführungsöffnung vollständig durch den Anker erstreckt, die Verbindungsstange sich zumindest bereichsweise in die Durchführungsöffnung erstreckt und die Verbindungsstange an einem Endbereich mit dem Anker verbunden ist.

Eine weitere Alternative besteht darin, dass ein Befestigungselement an der dem Ventilblock abgewandten Seite des Ankers angeordnet ist, welches den Anker und die Verbindungsstange lösbar verbindet. Die Anordnung des Befestigungselements an einer Seite des Ankers ermöglicht ein einfaches Lösen und Befestigen der Verbindungsstange. Das Befestigungselement kann sich dabei teilweise in den Anker hinein erstrecken und mit diesem bündig abschließen oder geringfügig über die Stirnfläche überstehen. Ebenso kann es aber auch vollständig außerhalb des Ankers angeordnet sein.

Als Weiterbildung des magnetbetätigten Mehrwegehydraulikventils kann vorgesehen sein, dass die Doppelhubmagneteinheit ein Doppelhubmagnetgehäuse mit einem stirnseitig lösbar angeordneten Verschlusselement aufweist, mittels welchem das am Anker angeordnete Befestigungselement zugänglich ist. Mittels des Verschlusselements kann auch im zusammengebauten Zustand des Hydraulikventils eine Zugangsöffnung zum Anker geschaffen werden. Zudem ergibt sich durch das lösbare Verschlusselement und das am Anker angeordnete Befestigungselement die Möglichkeit, den Anker im zusammengebauten Zustand des Hydraulikventils von der Verbindungsstange zu lösen. Hierzu muss lediglich das am Anker angeordnete Verschlusselement gelöst werden.

Ferner kann vorgesehen sein, dass die Durchführungsöffnung eine Ringschulter aufweist und der Endbereich der Verbindungsstange, der sich in die Durchführungsöffnung erstreckt, die Anschlagfläche aufweist, und Endanschlagfläche und Ringschulter miteinander in Kontakt stehen. Mittels der Endanschlagfläche und der Ringschulter ergibt sich eine genau definierte Position von Verbindungsstange und Anker zueinander. Da die Verbindungsstange durch das Innere des Ankers hindurch verläuft ist die genaue Position der beiden Elemente zueinander beim Zusammenbau durch den Monteur nicht zu erkennen. Mittels der Endanschlagfläche und Ringschulter wird aber sichergestellt, dass beide Bauteile die für die korrekte Funktion des Hydraulikventils notwendige Position einnehmen. Insbesondere im Hinblick darauf, dass die Nullstellung des Ankers mit der Nullstellung des Hydraulikventils übereinstimmen muss, kann durch diese Gestaltung eine sehr einfache Nullabstimmung erfolgen. Die Verbindungsstange muss hierzu lediglich in einer zuvor definierten Länge hergestellt werden. Beim Zusammenbau des Hydraulikventils kann deshalb eine aufwändige Nullabstimmung entfallen. Der Anker kann einfach an der Verbindungsstange befestigt werden. Endanschlagfläche und Ringschulter sind wichtige Elemente für die Nullabstimmung des erfindungsgemäßen Hydraulikventils.

Weiter wird erfindungsgemäß ein Verfahren zur Montage eines magnetbetätigten Mehrwegehydraulikventils vorgeschlagen, welches die Schritte umfasst: Befestigen einer Verbindungsstange und einer Verlängerung am Ventilkolben, Einbringen des Ventilkolbens in den Ventilblock, Aufschieben einer ersten Zentrierfeder auf die Verbindungsstange, Aufschieben eines Doppelhubmagnetgehäuses auf die Verbindungsstange und Befestigen des Doppelhubmagnetgehäuses an einer ersten Verbindungsseite des Ventilblocks, Aufschieben des Ankers auf die Verbindungsstange, wobei sich die Verbindungsstange zumindest mit einem Endbereich in eine Durchführungsöffnung des Ankers erstreckt, Befestigen der Verbindungsstange am Anker und Verschließen des Doppelhubmagnetgehäuses mit einem Verschlusselement. Diese Weise des Zusammenbaus ist vorteilhaft, da alle Elemente auf sehr einfache Weise zueinander ausgerichtet werden können. So kann der Ventilkolben mit der daran angebrachten Verbindungsstange und Verlängerung auf einfache Weise in den Ventilblock eingeschoben werden. Auf die nun vom Ventilblock und vom Ventilkolben seitlich abstehende Verbindungsstange kann die Zentrierfeder aufgeschoben werden. In einem nächsten Schritt wird das Doppelhubmagnetgehäuse an der ersten Verbindungsseite des Ventilblocks befestigt. Dabei wird die erste Zentrierfeder zwischen dem Doppelhubmagnetgehäuse und dem Ventilkolben bzw. dem Ventilblock fixiert. Die Verbindungsstange erstreckt sich in das Doppelhubmagnetgehäuse. Üblicherweise befindet sich der Anker des Doppelhubmagneten bereits im Doppelhubmagnetgehäuse. Wird nun das Doppelhubmagnetgehäuse an der ersten Verbindungsseite des Ventilblocks befestigt, so wird der Anker durch das Doppelhubmagnetgehäuse zentriert, so dass die Verbindungsstange automatisch mit Befestigung des Doppelhubmagnetgehäuses am Ventilblock in die Durchführungsöffnung des Ankers gleitet. Bei dieser Art des Zusammenbaus ergibt es sich also, dass jeweils immer nur eines der Elemente zum anderen relativ in seiner Position verändert wird. Es ist für einen Monteur also sehr einfach, den Zusammenbau vollständig alleine durchzuführen. Zum Abschluss des Zusammenbaus wird die Verbindungsstange am Anker befestigt und ggf. gekontert und das Doppelhubmagnetgehäuse mit einem Verschlusselement verschlossen.

Im Folgenden wird die Erfindung anhand der Zeichnungen näher beschrieben. Es zeigen:

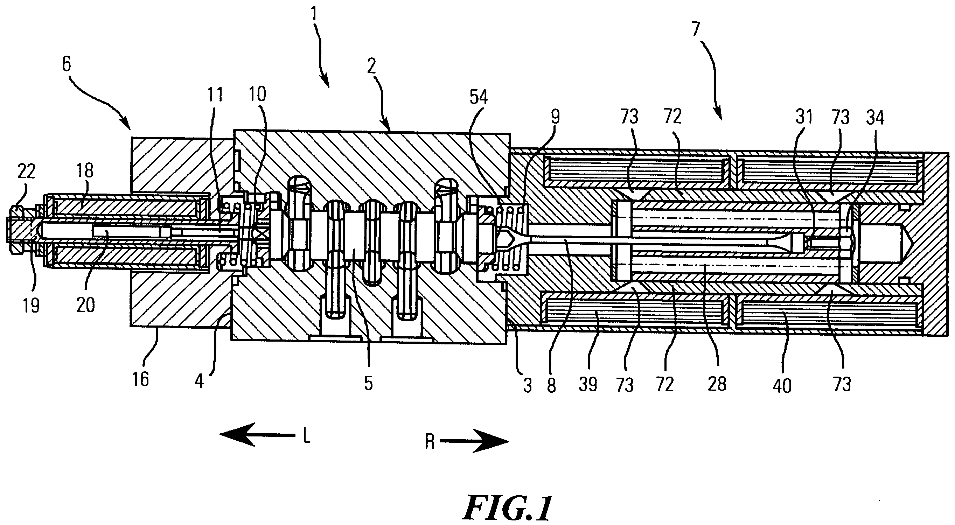

- Fig. 1: eine geschnittene schematische Gesamtdarstellung eines Mehrwegehydraulikventils mit einer Wegmesssystemeinheit und einer Doppelhubmagneteinheit,
- Fig. 2: eine schematische Schnittdarstellung des Ventilblocks des Mehrwegehydraulikventils mit darin befindlichem Ventilkolben,
- Fig. 3: eine schematische Schnittdarstellung der Doppelhubmagneteinheit des Mehrwegehydraulikventils,
- Fig. 4: eine schematische Schnittdarstellung der Wegmesssystemeinheit des Mehrwegehydraulikventils,
- Fig. 5: eine schematische Ansicht der Verbindungsstange, zum Verbinden von Doppelhubmagneteinheit und Ventilkolben,
- Fig. 6: eine Verlängerung des Ventilkolbens mit daran befestigtem Signalgeber,
- Fig. 7: eine Seitenansicht der Doppelhubmagneteinheit aus Fig. 3 und
- Fig. 8: eine Seitenansicht der Wegmesssystemeinheit aus Fig. 4

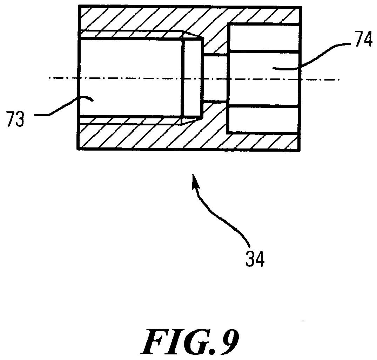

- Fig. 9: ein alternatives Befestigungselement um die Verbindungsstange am Anker zu kontern,
- Fig. 10: eine Verdrehsicherung um ein verdrehen des Ventilkolbens im Ventilblock zu verhindern,
- Fig. 11: eine schematische Gesamtansicht eines erfindungsgemäßen Hydraulikventils.

Das Mehrwegehydraulikventil 1 umfasst einen Ventilblock 2, eine Wegmesssystemeinheit 6 und eine Doppelhubmagneteinheit 7.

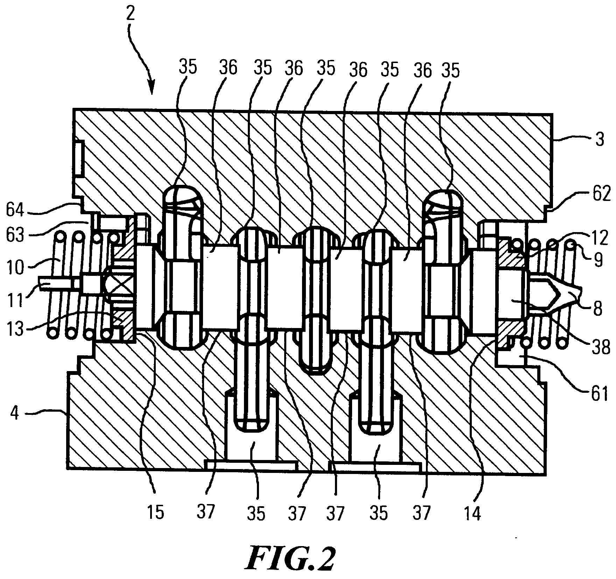

Der Ventilblock 2 weist eine erste Verbindungsseite 3 und eine zweite Verbindungsseite 4 auf, die sich am Ventilblock 2 an entgegengesetzten Seiten befinden und einander abgewandt sind. Der Ventilblock 2 weist eine durch den Ventilblock 2 verlaufende Ventilkolbenöffnung zur Aufnahme eines Ventilkolbens 5 auf. In die Ventilkolbenöffnung münden eine Vielzahl von Hydraulikfluidkanälen 35. Die Hydraulikfluidkanäle 35 können beispielsweise zu einem Tank, einer hydraulischen Pumpe, oder einer Zuführ- bzw. Rückleitung eines hydraulischen Aktuators führen. Die Hydraulikfluidkanäle 35 münden voneinander beabstandet in die Ventilkolbenöffnung. In der Mittelstellung des Ventilkolbens 5, wie in Fig. 2 gezeigt, besteht keine Fluidverbindung zwischen den Hydraulikfluidkanälen 35. Dies wird durch Steuernocken 36 sichergestellt, die zusammen mit Steuerflächen 37, die sich an der Außenwand der Ventilkolbenöffnung zwischen den Hydraulikfluidkanälen 35 befinden, verhindert. Zwischen den Steuernocken 36 sind Steuertaschen in den Ventilkolben eingebracht. Die Steuertaschen weisen einen geringeren Außendurchmesser als die Steuernocken auf. Wird der Ventilkolben 5 in der Ventilkolbenöffnung axial verschoben, so bewegen sich die Steuernocken 36 des Ventilkolbens 5 relativ zu den Steuerflächen 37, wodurch zwischen Hydraulikfluidkanälen 35 mittels der Steuertaschen eine Fluidverbindung hergestellt wird. Abhängig vom Weg und der Richtung der Verschiebung des Ventilkolbens 5 kann dabei gesteuert werden, zwischen welchen Hydraulikfluidkanälen 35 eine Fluidverbindung hergestellt wird und welcher Volumenstrom an Hydraulikfluid zwischen den Hydraulikfluidkanälen 35 zugelassen wird.

Am ersten axialen Endbereich des Ventilkolbens 5 ist ein Zentrierbund 38 für einen ersten Federteller 12 angeordnet. Der Zentrierbund 38 dient zur Aufnahme des ersten Federtellers 12 und sorgt für dessen korrekte Positionierung auf dem Ventilkolben 5. Der erste Federteller 12 stützt sich am Ventilkolben 5 axial an einer rings um den Zentrierbund 38 verlaufenden Fläche ab. Der erste Federteller 12 ist ausgebildet, um eine erste Zentrierfeder 9 aufzunehmen, die sich am ersten Federteller 12 abstützt. Der erste Federteller 12 kann in einer Mittelposition des Ventilkolbens 5, wie in Fig. 2 gezeigt, mit einer ersten Anschlagfläche 14 in Kontakt stehen. Kräfte, die also axial über die erste Zentrierfeder 9 eingebracht werden, werden durch den ersten Federteller 12 auf den Ventilkolben 5, sowie auf die erste Anschlagfläche 14 des Ventilblocks 2 eingeleitet. Am Zentrierbund 38 ist in axialer Richtung eine Verbindungsstange 8 mittels eines Gewindes befestigt. Die Verbindungsstange 8 erstreckt sich dabei durch eine zentrale Öffnung des ersten Federtellers 12 sowie durch die erste Zentrierfeder 9.

Der Ventilkolben 5 steht in einem zweiten axialen Endbereich mit einem zweiten Federteller 13 in Kontakt. Weiterhin kann der Federteller 13 bei einer Mittelposition des Ventilkolbens 5 mit einer zweiten Anschlagfläche 15 des Ventilblocks 2 in Kontakt stehen. Der zweite Federteller 13 ist dazu ausgebildet, mit einer zweiten Zentrierfeder 10 in Kontakt zu stehen. Die von der zweiten Zentrierfeder 10 axial eingeleiteten Kräfte werden durch den Federteller 13 auf den Ventilkolben 5 bzw. auf die zweite Anschlagfläche 15 eingeleitet. Am zweiten axialen Endbereich des Ventilkolbens 5 ist eine Verlängerung 11 mittels eines Gewindes befestigt. Die Verlängerung 11 verläuft dabei durch eine Öffnung des zweiten Federtellers 13 sowie durch die zweite Zentrierfeder 10. Die Verlängerung 11, der Ventilkolben 5, die Verbindungsstange 8, erster und zweiter Federteller 12,13 sowie die ersten und zweiten Zentrierfedern 9,10 liegen koaxial zueinander.

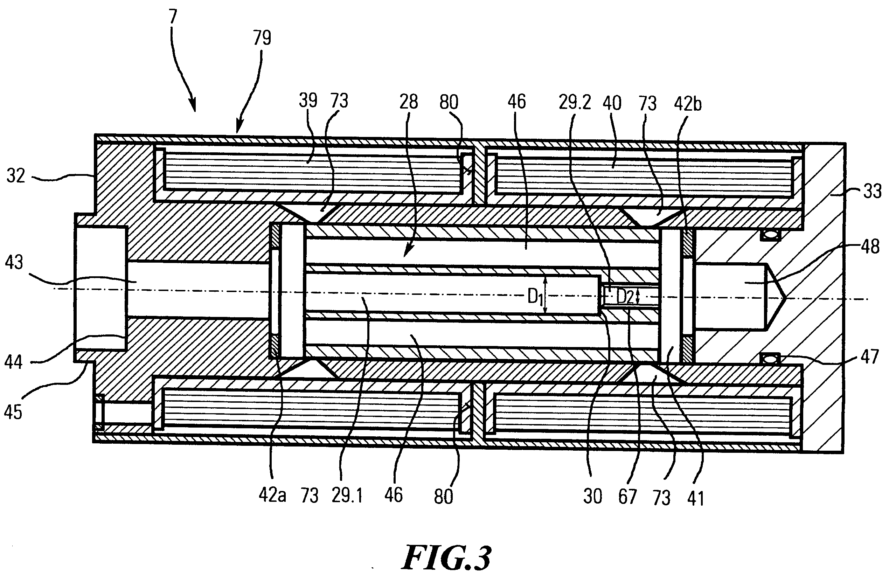

Die Doppelhubmagneteinheit für das erfindungsgemäße Mehrwegehydraulikventil wird in Fig. 3 gezeigt. Der grundsätzliche Aufbau sowie die Funktionsweise von Doppelhubmagneten sind bekannt, weshalb hier nur auf den grundsätzlichen Aufbau des erfindungsgemäß verwendeten Doppelhubmagneten eingegangen werden soll. Die Doppelhubmagneteinheit 7 umfasst ein Doppelhubmagnetgehäuse 79 mit einem Polrohr 32, zwei zylindrischen Spulen 39,40, einem Anker 28 sowie einem Verschlusselement 33. Das Polrohr 32 weist eine Ankeröffnung 41 auf, in der der Anker 28 axial verschiebbar gelagert ist. Koaxial mit der Ankeröffnung 41 sind die Spulen 39,40 in das Doppelhubmagnetgehäuse 79 eingebettet. Zwischen den Spulen 39, 40 und der Ankeröffnung 41 verläuft das Polrohr 32. Die Ankeröffnung 41 wird durch das Verschlusselement 33 verschlossen und druckfest abgedichtet. Zu den beiden axialen Enden der Ankeröffnung 41, welche jeweils durch das Polrohr 32 und das Verschlusselement 33 gebildet sind, sind nichtmagnetische Anschlagelemente 42a, 42b positioniert.

Die Spulen 39, 40 sind durch einen Wandbereich 72 des Polrohrs 32 vom Anker 28 bzw. der Ankeröffnung 41 getrennt. Der Wandbereich 72 weist Steuerkonen 73 auf, die sich durch die Veränderung des magnetischen Flusses positiv auf die Funktion des Doppelhubmagneten auswirken.

Zwischen den Spulen 39, 40 erstreckt sich eine scheibenartig geformte Flussleitscheibe 80, welche mit dem Doppelhubmagnetgehäuse 79 verbunden ist.

Die Bewegung des Ankers 28 geschieht in für Doppelhubmagneten bekannter Weise. Durch eine der beiden Spulen 39,40 wird Strom geleitet, was magnetische Kräfte erzeugt, mittels welchen der Anker 28 eine Lageänderung erfährt. In Abhängigkeit von der Stromstärke sowie von der Wahl der Spulen 39,40, bewegt sich der Anker 28 in eine vorgegebene Richtung. Zudem wird dadurch ermöglicht, den Anker 28 und den damit verbundenen Ventilkolben 5 in eine vorgegebene Position zu verfahren und in dieser Position zu halten, insbesondere wenn sich das Ventil in einer Lageregelung mit einer Onboard-Elektronik befindet.

Das Doppelhubmagnetgehäuse 79 weist auf der dem Verschlusselement 33 gegenüberliegenden bzw. abgewandten Seite eine Verbindungsöffnung 43 auf, die sich vom Endbereich des Doppelhubmagnetgehäuses 79 bis zur Ankeröffnung 41 erstreckt. Ankeröffnung 41 und Verbindungsöffnung 43 sind dabei koaxial zueinander angeordnet. Die Verbindungsöffnung 43 erweitert sich im Endbereich des Doppelhubmagnetgehäuses 79, wobei ein erster Federanschlag 44 ausgebildet ist. Zudem ist im Endbereich des Doppelhubmagnetgehäuses, an dem die Verbindungsöffnung 43 mündet, ein Zentrierflansch 45 angeordnet. Der Zentrierflansch 45 ist nach Art eines ringförmigen Zentrierbundes gestaltet und ragt über die Stirnfläche des Doppelhubmagnetgehäuses 79, die mit der ersten Verbindungsseite 3 des Ventilblocks 2 in Kontakt steht, hinaus.

Der Anker 28 weist eine zentrale Durchführungsöffnung 29.1, 29.2 auf, die sich vollständig durch den Anker 28 erstreckt und bei in die Ankeröffnung 41 eingeschobenem Anker 28 koaxial zur Ankeröffnung 41 liegt. Die Durchführungsöffnung 29.1, 29.2 weist in einem ersten Bereich 29.1 einen ersten Durchmesser D1 sowie in einem zweiten Bereich 29.2 einen zweiten Durchmesser D2 auf, wobei der zweite Durchmesser D2 im Bereich 29.2 kleiner ist als der erste Durchmesser D1 im Bereich 29.1. Am Übergang von erstem Durchmesser D1 zu zweitem Durchmesser D2 ist eine Ringschulter 30 ausgebildet, die in der Hälfte des Ankers liegt, der dem Verschlusselement 33 zugewandt ist. Die Ringschulter 30 unterteilt die Durchführungsöffnung 29.1, 29.2 in die Bereiche 29.1, 29.2. Weiterhin weist der Anker 28 Ausnehmungen 46 auf, die parallel zur Durchführungsöffnung 29.1, 29.2 angeordnet sind und sich bevorzugt vollständig axial durch den Anker 28 erstrecken. Die Ausnehmungen 46 ermöglichen den Fluss des Hydraulikfluids durch den Anker 28 hindurch, was den Widerstand des Hydraulikfluids der der Ankerbewegung entgegenwirkt, verringert.

Das Verschlusselement 33 steht im befestigten Zustand mit einem Endbereich des Doppelhubmagnetgehäuses 79 in Kontakt. Bevorzugt wird das Verschlusselement 33 mittels Schrauben oder Bolzen befestigt, welche sich durch Bolzenöffnungen durch das Doppelhubmagnetgehäuse 79 hindurcherstrecken und im Ventilblock 2 verschraubt sind. Dabei ist zwischen Verschlusselement 33 und Doppelhubmagnetgehäuse 79 ein Dichtungselement 47 vorgesehen, welches für eine druckfeste Abdichtung sorgt. Koaxial zur Ankeröffnung 41 weist das Verschlusselement 33 eine Ausnehmung 48 auf.

Das bevorzugt genutzte Wegmesssystem ist nach Art eines linear variablen Differentialtransformators (LVDT) aufgebaut. Allerdings können auch weitere im Stand der Technik bekannte Wegmesssysteme genutzt werden. Der Aufbau und die Funktionsweise derartiger Wegmesssysteme sind aus dem Stand der Technik bekannt, weshalb hierauf nicht näher eingegangen wird.

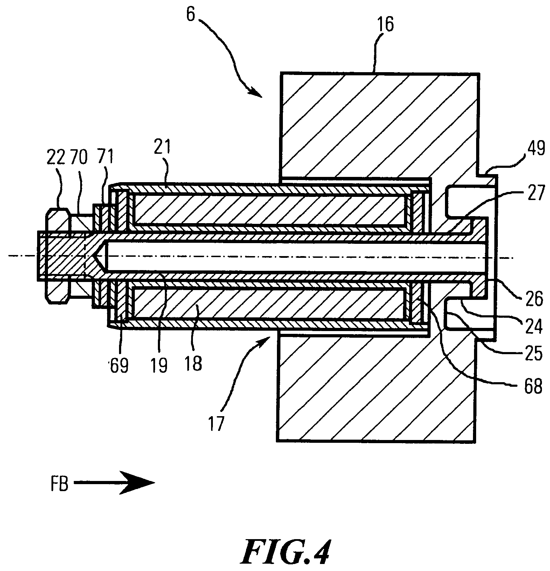

Die Wegmesssystemeinheit 6 (siehe Fig. 4) umfasst eine Wegmesssystembasis 16, ein Druckrohr 19 und einen Signalempfänger 18. Die Wegmesssystembasis 16 weist zu einer Seite eine Aufnahmeöffnung 17 auf. In dieser Aufnahmeöffnung 17 ist zumindest bereichsweise ein Signalempfänger 18 aufgenommen. Der Signalempfänger 18 weist einen für LVDT-Wegmesssysteme typischen Aufbau auf und kann z.B. eine Spulenanordnung umfassen. An die Aufnahmeöffnung 17 schließt sich eine Druckrohrdurchführung 27 an, so dass sich eine Öffnung vollständig durch die Wegmesssystembasis 16 erstreckt. Die Aufnahmeöffnung 17 weist dabei einen größeren Durchmesser auf als die Druckrohrdurchführung 27. An der Seite der Wegmesssystembasis 16, die im zusammengebauten Zustand des Mehrwegehydraulikventils 1 dem Ventilblock 2 zugewandt ist, ist eine ringförmige Anlagefläche 25 positioniert, an der sich später im zusammengebauten Zustand des Mehrwegehydraulikventils die zweite Zentrierfeder 10 abstützt. Von der ringförmigen Anlagefläche 25 umschlossen, ist an der Wegmesssystembasis 16 ein Bund 24 angeordnet. Das Druckrohr 19, das in die Druckrohrdurchführung 27 eingepresst ist, stützt sich auf dem Bund 24 mit einem Druckrohrflansch 26 ab. Das Druckrohr erstreckt sich also von der Seite der Wegmesssystembasis 16, die später im zusammengebauten Zustand dem Ventilblock 2 zugewandt ist, durch die Druckrohrdurchführung 27 und die Aufnahmeöffnung 17 durch die Wegmesssystembasis 16 und über diese hinaus. Ein Bereich der Außenfläche des Druckrohrs 19 steht mit einer Innenfläche der Druckrohrdurchführung 27 in Kontakt und bildet zusammen mit dieser eine Dichtfläche.

Das Druckrohr 19 (s. Fig. 4) ist als druckfestes, einseitig offenes Rohr oder Hülse ausgebildet. Auf einen Außenbereich des Druckrohrs 19 ist der Signalempfänger 18 aufgeschoben. Der Signalempfänger 18 ist dabei im gezeigten Ausführungsbeispiel teilweise in die Aufnahmeöffnung 17 der Wegmesssystembasis 16 eingeschoben. Auf das Druckrohr 19 ist weiterhin ein erstes Anschlagelement 68 aufgeschoben, welches zwischen der Wegmesssystembasis 16 und dem Signalempfänger 18 positioniert ist. Das Druckrohr 19 erstreckt sich über den aufgeschobenen Signalempfänger 18 hinaus, d. h. das Druckrohr 19 ist länger als der aufgeschobene Signalempfänger 18. Des Weiteren ist im gezeigten Ausführungsbeispiel ein weiteres, zweites Anschlagelement 69 zum Signalempfänger 18 angrenzend auf dem Druckrohr 19 angeordnet. Der Signalempfänger 18 kann also zu beiden axialen Seiten mit Anschlagelementen 68, 69 in Kontakt stehen. Die Anschlagelemente 68, 69 können dazu dienen die korrekte Position des Signalempfängers 18 auf dem Druckrohr 19 einzustellen. Die Anzahl bzw. Länge der Anschlagelemente 68, 69 kann derart gewählt werden, dass der Signalempfänger 18 in der optimalen Position sitzt. Signalempfänger 18 und Druckrohr 19, sowie Aufnahmeöffnung 17 und Druckrohrdurchführung 27 liegen koaxial zueinander. Hierdurch ergibt sich für den Signalempfänger 18 eine optimale Zentrierung sowohl hinsichtlich des Druckrohrs 19 als auch in der Aufnahmeöffnung 17.

Über den Signalempfänger 18 kann sich optional ein Signalempfängergehäuse 21 erstrecken, welches sich an der Wegmesssystembasis 16 abstützt. Dabei kann sich das Signalempfängergehäuse 21 sowohl in der Aufnahmeöffnung 17 als auch am Grund der Aufnahmeöffnung 17 der Wegmesssystembasis 16 abstützen. Das Signalempfängergehäuse 21 kann über das Druckrohr 19 und den Signalempfänger 18 geschoben sein, so dass ein Endbereich des Druckrohrs 19 über das Signalempfängergehäuse 21 hinausragt. Im Endbereich des Druckrohrs 19, welcher über das Signalempfängergehäuse 21 hinausragt, ist ein Befestigungselement 22 angebracht. Zwischen dem Befestigungselement 22 und dem Signalempfängergehäuse 21 ist eine Unterlegscheibe 70 sowie ein Federelement 71 angeordnet. An der Seite der Wegmesssystembasis 16, die dem Ventilkolben 5 zugeordnet ist, ist des Weiteren ein Zentrierflansch 49 angeordnet. Anstatt des beschriebenen Signalempfängergehäuses 21 kann auch jede weitere beliebige Gehäuseanordnung für das Wegmesssystem bzw. den Signalempfänger genutzt werden. Als alternative Gehäuseanordnung kann beispielsweise auch ein Elektronikgehäuse 78 für die Elektronik des Hydraulikventils dienen.

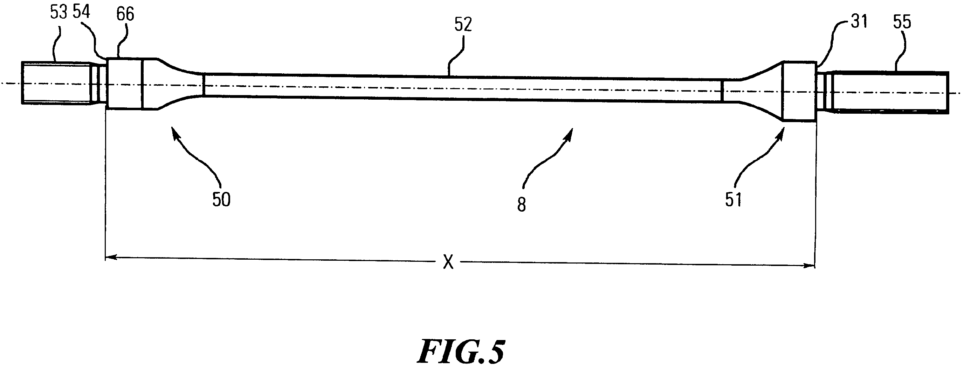

Die Verbindungsstange 8 (Fig. 5) weist einen ersten Befestigungsbereich 50 und einen zweiten Befestigungsbereich 51 auf, zwischen denen sich ein stabförmiger Bereich 52 erstreckt. Der erste Befestigungsbereich 50 ist durch ein Gewinde 53 gekennzeichnet, welches in eine Öffnung des Zentrierbunds 38 des Ventilkolbens 5 eingeschraubt werden kann. Im Anschluss an das Gewinde 53 befindet sich ein Ventilkolbenanschlag 54, der eine maximale Einschraubposition festlegt. Der Ventilkolbenanschlag 54 ist als ringförmige Fläche ausgebildet, die sich quer zur Längsachse der Verbindungsstange 8 erstreckt. An den Ventilkolbenanschlag schließt sich in axialer Richtung bevorzugt eine Schraubschlüsselaufnahme oder Schlüsselfläche 66 mit z.B. einer geeigneten Aussenkontur zum Ansetzen eines Schraubenschlüssels an. Auf diese Weise wird die spätere Montage am Ventilkolben erleichtert. Im Anschluss daran geht die Verbindungsstange 8 in den stabförmigen Bereich 52 über. Der zweite Befestigungsbereich 51 weist ein Gewinde 55 auf. In Richtung des stabförmigen Bereichs 52 der Verbindungsstange 8 schließt sich daran eine Ringschulter 31 an, die als ringförmiger Bereich quer zur Längsachse der Verbindungsstange 8 ausgebildet ist. An der Ringschulter 31 erfolgt ein sprunghafter Anstieg des Durchmessers der Verbindungsstange 8. Im Anschluss daran verringert sich der Durchmesser wieder und geht in den stabförmigen Bereich 52 über. Endanschlagfläche 31 und Einschraubanschlag 54 sind mit einem Abstand der Länge X voneinander beabstandet.

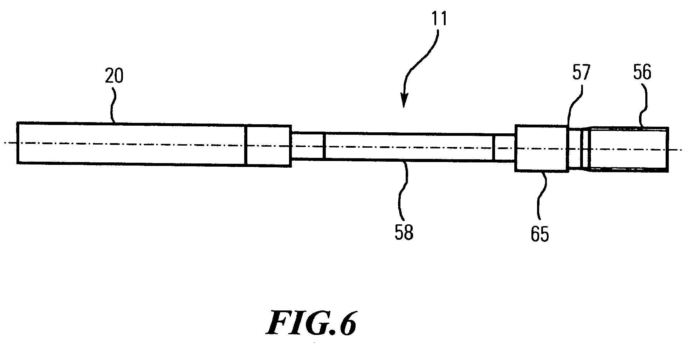

Die Verlängerung 11 (Fig. 6) weist in einem Endbereich ebenfalls ein Gewinde 56 auf, mit dem eine Verbindung zum Ventilkolben 5 hergestellt wird. Anschließend an das Gewinde 56 befindet sich ein Einschraubanschlag 57, der eine maximale Einschraubposition in den Ventilkolben vorgibt. An den Einschraubanschlag 57 schließt sich eine Schraubschlüsselaufnahme 65 und ein Verlängerungsbereich 58 an. Am Verlängerungsbereich 58 ist der Signalgeber 20 angeordnet. Der Signalgeber 20 hat einen größeren Umfang als der Verlängerungsbereich 58.

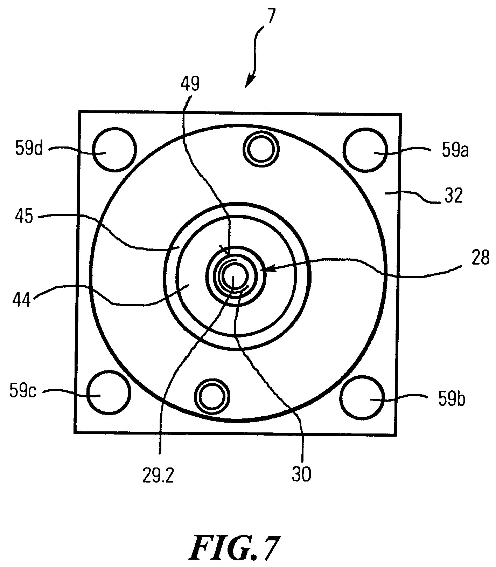

Figur 7 zeigt eine Seitenansicht der Doppelhubmagneteinheit 7 mit Blick auf diejenige Stirnfläche des Doppelhubmagnetgehäuses 79 welche im montierten Zustand mit der ersten Verbindungsseite 3 des Ventilblocks 2 in Kontakt steht. Die Verbindungsstange 8 ist in dieser Darstellung nicht montiert. Zu sehen sind Öffnungen 59a, 59b, 59c, 59d zur Aufnahme von Bolzen oder ähnlichen Befestigungselementen, mittels welchen das Doppelhubmagnetgehäuse am Ventilblock 2 befestigt wird. Durch die Verbindungsöffnung 43 fällt der Blick auf den in die Ankeröffnung 41 eingeschobenen Anker 28. In der Seitenansicht schließt sich an den kreisförmigen Zentrierflansch 45 der erste Federanschlag 44, ein Bereich der Stirnfläche des Ankers 28, die Ringschulter 30 und die Durchführungsöffnung 29.1, 29.2 an. Weiter können an der Stirnfläche des Doppelhubmagnetgehäuses zusätzliche Öffnungen vorgesehen sein die beispielsweise zur Durchführung von Versorgungsleitungen für den Doppelhubmagneten dienen.

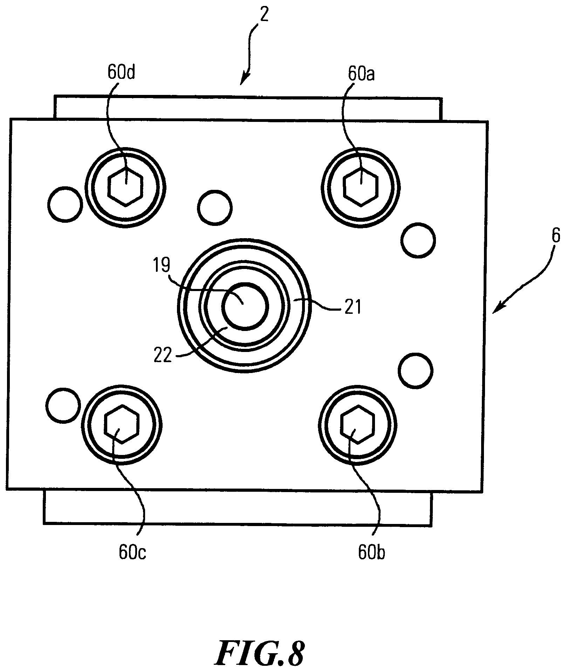

Wie in Figur 8 gezeigt, wird die Wegmesssystembasis 16 ebenfalls mittels vier Schrauben, Bolzen, o.ä. 60a, 60b, 60c, 60d am Ventilblock 2 befestigt.

Im zusammengebauten, funktionsfähigen Zustand des magnetbetätigten Mehrwegehydraulikventils 1 schließt sich am Ventilblock 2 an der ersten Verbindungsseite 3 die Doppelhubmagneteinheit 7 an. Die Doppelhubmagneteinheit 7 ist durch den Zentrierflansch 45 am Doppelhubmagnetgehäuse 79 mit der Verbindungsöffnung 43 koaxial zur Ventilkolbenöffnung des Ventilsblocks 2 ausgerichtet. Der Zentrierflansch 45 erstreckt sich dabei in eine Aussparung 61 des Ventilblocks 2. In der Aussparung 62, die an der ersten Verbindungsseite 3 am Übergang zur Aussparung 61 angeordnet ist, kann ein Dichtelement eingesetzt sein. Dieses Dichtelement wird bei einer am Ventilblock 2 befestigten Doppelhubmagneteinheit 7 durch den Zentrierflansch 45 überdeckt, so dass das in der Stufe 62 positionierte Dichtelement vollständig umschlossen ist.

An der zweiten Verbindungsseite 4, die der ersten Verbindungsseite 3 am Ventilblock 2 gegenüberliegt, ist die Wegmesssystemeinheit 6 angebracht. An der Wegmesssystembasis 16 ist hierzu an der dem Ventilblock 2 zugewandten Seite ein ringförmiger Zentrierflansch 49 vorgesehen. Der Zentrierflansch 49 erstreckt sich in eine Aussparung 63 des Ventilblocks 2, und kommt dort mit einer Außenfläche der Aussparung 63 in Kontakt. Die Aussparung 63 weist eine stufenweise Vergrößerung des Umfangs in Richtung der zweiten Verbindungsseite 4 auf, wodurch eine Stufe 64 gebildet ist. In die Stufe 64 wird ein Dichtelement eingesetzt. Dieses Dichtelement wird im zusammengebauten Zustand von Ventilblock 2 und Wegmesssystemeinheit 6 vollständig umschlossen. Bei am Ventilblock 2 angebrachter Wegmesssystemeinheit 6 liegt die zweite Zentrierfeder 10 mit einem Endbereich jeweils auf dem zweiten Federteller auf und stützt sich an diesem ab. Der andere Endbereich stützt sich an der Anlagefläche 25 der Wegmesssystembasis 16 ab. Dabei erstreckt sich der Bund 24 sowie der Druckrohrflansch 26 des Druckrohrs 19 zumindest bereichsweise in das Innere, d.h. in einen von den Federwindungen umschlossenen Bereich der zweiten Zentrierfeder 10. Dies ermöglicht eine kompakte Bauweise des Mehrwegehydraulikventils.

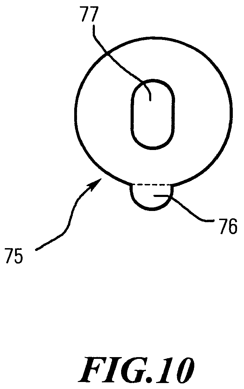

Das Hydraulikventil kann mit einer Verdrehsicherung 75 (Fig. 10) für den Ventilkolben 5 ausgestattet sein. Die Verdrehsicherung 75 verhindert ein Verdrehen des Ventilkolbens 5 innerhalb des Ventilblocks 2. Da das Hydraulikfluid mit hohem Druck gegen den Ventilkolben 5 strömt, wirkt auf diesen ein Drehmoment. Mittels der Verdrehsicherung kann der Ventilkolben 5 an einer Rotationsbewegung innerhalb des Ventilblocks 2 gehindert werden. Hierzu weist der Ventilblock konzentrisch zur Aufnahmeöffnung für den Ventilkolben 5 eine Aufnahme für die Verdrehsicherung 75 auf. Die Aufnahme kann bevorzugt in einer der ersten oder zweiten Anschlagflächen 14, 15 (s. Fig. 2) eingebracht sein. Die Aufnahme ist an die Außenkontur der Verdrehsicherung 75 angepasst und umschließt diese, um ein Verdrehen der Verdrehsicherung 75 entlang der Längsachse des Ventilkolbens zu verhindern. Die Verdrehsicherung weist eine im Wesentlichen kreisrunde Außenkontur auf, aus der sich eine Nase 76 erstreckt. Die Nase 76 greift in die entsprechend geformte Aufnahme im Ventilblock 2 ein. Durch die Verdrehsicherung 75 hindurch erstreckt sich ein Langloch 77. Das Langloch ist derart gestaltet, dass ein in seiner Formgebung angepasster Endbereich des Ventilkolbens 5 in das Langloch 77 eingreifen kann. Die Verdrehsicherung 75 stützt sich im eingebauten Zustand mit der Nase 76 in der Aufnahme im Ventilblock 2 ab und verhindert mittel des Langlochs 77 ein Verdrehen des Ventilkolbens 5. Die Verdrehsicherung 75 kann deshalb ein Drehmoment, welches auf den Ventilkolben 5 wirkt, aufnehmen und eine Rotation des Ventilkolbens 5 verhindern. Die Verdrehsicherung ist bevorzugt als Stanzteil nach Art einer Beilagscheibe geformt. Die Dicke der Verdrehsicherung 75 beträgt bevorzugt maximal ca. ein Drittel des gesamten Verfahrwegs des Ventilkolbens, d.h. von der maximalen Position des Ventilkolbens in Richtung der Wegmesssystemeinheit bis zur maximalen Position des Ventilkolbens in Richtung der Doppelhubmagneteinheit. Die Verdrehsicherung 75 kann die Funktion des ersten oder zweiten Federtellers übernehmen. Ebenso kann die Verdrehsicherung zusätzlich zu den beiden Federtellern vorgesehen sein.

Es kann vorgesehen sein, dass eine der ersten und zweiten Zentrierfedern 9, 10 eine größere Kraft ausübt als die andere Zentrierfeder. Dies kann beispielsweise durch eine Auswahl unterschiedlicher Federn oder durch eine unterschiedliche Komprimierung im eingebauten Zustand der Federn ermöglicht werden. Ferner kann vorgesehen sein, dass der Abstand zwischen den Kontaktflächen des Ventilkolben 5 mit den Federtellern geringfügig größer ist als der Abstand zwischen erster und zweiter Anschlagfläche 14, 15, wodurch eine Kontaktfläche des Ventilkolbens 5 für einen der Federteller geringfügig über eine der Anschlagflächen 14, 15 hinausragt. Die Zentrierfeder welche die größere Kraft ausübt, schiebt den Ventilkolben deshalb in die Mittelposition, in der einer der Federteller sowohl an der Kontaktfläche des Ventilkolbens als auch an einer der Anschlagflächen 14, 15 anliegt. Auf der anderen Seite des Ventilkolbens liegt der andere Federteller hingegen lediglich an der Kontaktfläche des Ventilkolbens und nicht an der anderen Anschlagfläche an.

Im Folgenden wird die Wirkungs- und Funktionsweise des Mehrwegehydraulikventils erläutert.

In betriebsbereitem Zustand ist das Mehrwegehydraulikventil entlüftet und in den Druck führenden Hydraulikfluidkanälen 35 steht Hydraulikfluid an. Als Hydraulikfluid kann jedes bekannte Hydraulikfluid eingesetzt werden, insbesondere Hydrauliköl. Die Steuernocken 36 des Ventilkolbens 5 sowie die Steuerflächen 37 dichten die Hydraulikfluidkanäle 35 im Wesentlichen voneinander ab. Dies bedeutet, dass kein bzw. nur ein sehr geringfügiger Volumenstrom zwischen den Hydraulikfluidkanälen 35 besteht. Das Hydraulikfluid kann sich im Inneren des Mehrwegehydraulikventils innerhalb des Druckrohrs 19, der Aussparung 63, den Aussparungen 61,63 sowie der Verbindungsöffnung 43 und der Ankeröffnung 41 ausbreiten. Dabei kann in allen diesen Bereichen der maximale Druck auftreten, der auch in den Hydraulikfluidkanälen 35 anliegt. Der Anker 28 bewegt sich demnach im Doppelhubmagnetgehäuse 79 durch das Hydraulikfluid. Die Ausnehmungen 46 innerhalb des Ankers 28 dienen dabei dazu, den Widerstand des Ankers 28 in der Hydraulikflüssigkeit zu verringern. Die Hydraulikflüssigkeit kann also durch die Ausnehmungen 46 hindurchfließen, was den Widerstand der Hydraulikflüssigkeit gegen eine Bewegung des Ankers 28 verringert.

Abhängig von der gewünschten Bewegung des Ventilkolbens 5, werden eine bzw. beide Spulen 39,40 mit Strom versorgt. Daraufhin wirken auf den Anker 28 magnetische Kräfte, die eine Bewegung des Ankers hervorrufen. Diese Bewegung wird mittels der Verbindungsstange 8 auf den Ventilkolben 5 übertragen. Bewegt sich der Anker 28 in eine Bewegungsrichtung L, d.h. nach links, so bewegt sich auch die Verbindungsstange 8, der Ventilkolben 5 sowie die Verlängerung 11 und der Signalgeber 20 in diese Richtung. Des Weiteren wird der zweite Federteller 13 durch eine Stirnfläche des Ventilkolbens 5 nach links bewegt und die zweite Zentrierfeder 10 komprimiert. Der erste Federteller 12 liegt an der ersten Anschlagfläche 14 des Ventilblocks 2 an, wobei sich der Zentrierbund 38 des Ventilkolbens 5 mit dem Ventilkolben 5 axial relativ zum ersten Federteller 12 verschiebt. Je weiter sich der Anker 28 in Bewegungsrichtung L bewegt, desto größer wird die hierfür aufzubringende Kraft, da die zweite Zentrierfeder 10 komprimiert wird und eine kontinuierlich steigende Gegenkraft aufbringt.

Soll der Ventilkolben 5 in eine Mittelposition gebracht werden, so wird die Stromversorgung der Spulen 39,40 unterbrochen oder kontinuierlich verringert, wodurch die jeweils komprimierte erste oder zweite Zentrierfeder 9,10 wieder in ihre Ursprungsform zurückkehrt und den jeweiligen ersten bzw. zweiten Federteller 12,13 gegen die erste bzw. zweite Anschlagfläche 14,15 presst. Durch diese Bewegung wird der Ventilkolben 5, sowie die daran angeschlossenen Elemente Verbindungsstange 8, Anker 28, Verlängerung 11 und Signalgeber 20 ebenfalls bewegt. Soll der Ventilkolben 5 in die Bewegungsrichtung R bewegt werden, d.h. nach rechts, so wird die entsprechende Spule 39, 40 bzw. werden beide Spulen entsprechend mit Strom versorgt, was zu einer Bewegung des Ankers in Bewegungsrichtung R führt. Hierbei wird eine Zugkraft mittels der Verbindungsstange 8 auf den Ventilkolben 5, die Verlängerung 11 und den Signalgeber 20 übertragen. Die erste Zentrierfeder 9 wird komprimiert und der erste Federteller 12 durch eine Stirnfläche des Ventilskolbens 5 nach rechts verschoben. Das Befestigungselement 34, welches an einer Stirnseite des Ankers sitzt und die Verbindungsstange 8 am Anker 28 hält bzw. sichert, bewegt sich dabei durch eine zentrale Öffnung des Anschlagelements 42b und erstreckt sich bei Anlage des Ankers 28 am Anschlagelement 42b in die Ausnehmung 48 des Verschlusselements 33. Das Befestigungselement 34 ist bevorzugt als Mutter ausgebildet, das auf einen Endbereich des Gewindes 55 der Verbindungsstange 8 aufgeschraubt ist, welches über die Stirnseite des Ankers 28 hinausragt. Alternativ kann das Verschlusselement auch in die Durchführungsöffnung 29.2 versenkt bzw. geringfügig überstehend platziert werden. Der Endbereich des Gewindes 55 der Verbindungsstange ist bei dieser Gestaltung kürzer und ragt nicht über die Stirnseite des Ankers 28 hinaus.

Für den Zusammenbau des Mehrwegehydraulikventils wird in einem ersten Schritt der Ventilkolben 5 mit der Verlängerung 11 und der Verbindungsstange 8 verbunden. An beiden Stirnseiten des Ventilkolbens 5 sind hierzu Gewindebohrungen eingebracht, in die ein Gewinde 53 der Verbindungsstange 8 sowie ein Gewinde 56 der Verlängerung 11 eingeschraubt werden. Die Verbindungsstange 8 weist angrenzend zum Gewinde 53 einen Ventilkolbenanschlag 54 auf, der eine maximale Einschraubposition kennzeichnet. Ähnlich hierzu weist die Verlängerung 11 angrenzend zum Gewinde 56 einen Einschraubanschlag 57 auf, der ebenfalls die maximale Einschraubposition der Verlängerung 11 kennzeichnet. Zur Vereinfachung des Einschraubens von Verlängerung 11 und Verbindungsstange 8 können angrenzend zu den Einschraubanschlägen 54,57 Schraubschlüsselaufnahmen 65,66 angeordnet sein. Diese können z.B. als Sechskant ausgebildet sein, um mittels eines Schraubschlüssels ein notwendiges Drehmoment zum Einschrauben von Verlängerung 11 und Verbindungsstange 8 aufbringen zu können. Die Verlängerung 11, der Ventilkolben 5 sowie die Verbindungsstange 8 liegen in ihrem verbundenen Zustand koaxial zueinander. Die Verlängerung, der Ventilkolben 5 sowie die Verbindungsstange 8 werden in einem folgenden Schritt in die Ventilkolbenöffnung des Ventilblocks 2 eingeschoben. Dabei liegen in einer optimalen Montageposition die Stirnflächen des Ventilkolbens 5 bündig zur ersten und zweiten Anschlagfläche 14,15 des Ventilblocks 2. Nun können Wegmesssystemeinheit 6 sowie Doppelhubmagneteinheit 7 montiert werden. Die Reihenfolge kann dabei grundsätzlich frei gewählt werden.

Zur Montage der Doppelhubmagneteinheit 7 wird der erste Federteller 12 über die Verbindungsstange 8 auf den Zentrierbund 38 des Ventilkolbens 5 geschoben, so dass der erste Federteller 12 mit der ersten Anschlagfläche 14 in Kontakt gelangt. Darauffolgend wird die erste Zentrierfeder 9 über die Verbindungsstange 8 geführt und mit dem ersten Federteller 12 in Kontakt gebracht. Die Verbindungsstange 8 verläuft also durch einen Innenraum der ersten Zentrierfeder 9, der durch die Windungen der ersten Zentrierfeder 9 gebildet ist.

Nachdem ein Dichtelement in die Stufe 62 eingelegt wurde, wird das Doppelhubmagnetgehäuse 79 mit der ersten Verbindungsseite 3 des Ventilblocks 2 in Kontakt gebracht. Dabei erstreckt sich die Verbindungsstange 8 in die Verbindungsöffnung 43 und die Ankeröffnung 41. Verbindungsöffnung 43, Ankeröffnung 41 und Verbindungsstange 8 liegen dabei koaxial zueinander. Die exakte Ausrichtung des Doppelhubmagnetgehäuses 79 am Ventilblock 2, sowie die koaxiale Ausrichtung von Verbindungsstange 8, Verbindungsöffnung 43 und Ankeröffnung 41 wird durch einen Zentrierflansch 45 an der Stirnseite des Doppelhubmagnetgehäuses 79 geschaffen. Der Zentrierflansch 45 erstreckt sich dabei in die Aussparung 61 an der ersten Verbindungsseite 3 des Ventilblocks 2 und steht mit einer Außenwand der Aussparung 61 in Kontakt. Die Verbindung des Doppelhubmagnetgehäuses 79 am Ventilblock 2 erfolgt mittels Befestigungselementen, wie z.B. Schrauben oder Bolzen durch Öffnungen 59a, 59b, 59c, 59d.

Üblicherweise ist der Anker 28 bereits in der Ankeröffnung 41 des Doppelhubmagnetgehäuses 79 platziert. Ist dies noch nicht der Fall, so wird der Anker 28 in die Ankeröffnung 41 des Doppelhubmagnetgehäuses 79 eingeschoben. Der Anker 28 wird dabei mittels des Polrohrs 32 in der Ankeröffnung 41 geführt, wobei zur Aufrechterhaltung eines Abstands zwischen den Außenwänden der Ankeröffnung 41 und des Ankers 28 eine Folie o.ä. platziert ist.

Durch die im Zentrum des Ankers 28 liegende axial verlaufende Durchführungsöffnung 29.1, 29,2 ist sichergestellt, dass auch die Durchführungsöffnung 29.1, 29.2 koaxial zum Ventilkolben 5 und der Verbindungsstange 8 verläuft. Beim Einschieben des Ankers 28 in die Ankeröffnung 41 kann sich die Verbindungsstange 8 deshalb in die Durchführungsöffnung 29.1, 29.2 erstrecken. In einem Befestigungsbereich 67, der Durchführungsöffnung 29.1, 29.2 ist ein Gewinde eingebracht, das mit dem Gewinde 55 der Verbindungsstange 8 verschraubt wird. Hierdurch erfolgt die Befestigung des Ankers 28 mit der Verbindungsstange 8. Der Befestigungsbereich 67 wird bevorzugt durch den Bereich 29.2 der Durchführungsöffnung mit dem Durchmesser D2 gebildet. Dabei ist die Länge des Gewindes 55 derart gewählt, dass dieses zumindest bereichsweise aus der Stirnfläche des Ankers 8, die dem Ventilblock 2 abgewandt ist, herausragt. Auf diesen Bereich des Gewindes 55, der aus der Stirnfläche des Ankers 28 herausragt, wird ein Befestigungselement 34 aufgeschraubt, was die Verbindung zwischen Verbindungsstange 8 und Anker 28 sichert. Alternativ kann auf das Gewinde im Befestigungsbereich 67 des Ankers 28 verzichtet werden. Die Verbindungsstange 8 wird in diesem Falle lediglich durch den Befestigungsbereich 67 hindurchgeschoben und lediglich durch das Befestigungselement 34 befestigt.

Wie bereits zuvor beschrieben, kann das Befestigungselement 34 auch als Sicherungshülse ausgestaltet sein und in der Durchführungsöffnung 29.2 platziert oder versenkt sein. Das Befestigungselement erstreckt sich also in den Anker hinein und kann z.B. bündig mit diesem abschließen oder geringfügig über diesen hinausragen. Eine solche Sicherungshülse ist in Fig. 10 dargestellt. Die Sicherungshülse weist an einer Stirnseite einen Einschraubbereich 73 auf, in den der Endbereich der Verbindungsstange 8 eingeschraubt wird. An der gegenüberliegenden Stirnseite ist eine Werkzeugaufnahme 74 vorgesehen, die z.B. als Innensechskant gestaltet sein kann. Die Länge der Sicherungshülse ist derart bemessen, dass diese im zusammengebauten Zustand der Doppelhubmagneteinheit nicht oder nur geringfügig über die Stirnseite des Ankers hinausragt. Es besteht deshalb die Möglichkeit auf die Ausnehmung 48 im Verschlusselement 33 zu verzichten oder diese kleiner zu gestalten. Die Sicherungshülse kann also ähnlich einer Hutmutter gestaltet sein und bietet den Vorteil mit ihrer geringen Größe sehr platzsparend zu sein.

Unabhängig von der gewählten Befestigungsweise erfolgt die Verbindung von Verbindungsstange 8 und Anker 28 immer derart, dass eine Trennung von Verbindungsstange 8 und Anker 28 bei montiertem Hydraulikventil mit abgenommenem Verschlusselement 33 möglich ist. Dies bedeutet, dass alle Elemente, die für ein Lösen des Ankers 28 von der Verbindungsstange 8 gelöst bzw. entfernt werden müssen mittels entfernen des Verschlusselements 33 zugänglich bzw. bedienbar sein müssen. In der Regel sind deshalb alle Befestigungselemente in der Hälfte des Ankes 28 angeordnet, die zum Ventilblock 2 abgewandt liegt.

In einem nächsten Schritt wird die Ankeröffnung 41 durch ein Verschlusselement 33 verschlossen. Das Verschlusselement 33 kann beispielsweise mittels Schrauben am Doppelhubmagnetgehäuse 79 befestigt werden. Bevorzugt wird das Verschlusselement mit Schrauben befestigt, die sich durch das Doppelhubmagnetgehäuse hindurch erstrecken und das Doppelhubmagnetgehäuse am Ventilblock befestigen.

Die Wegmesssystemeinheit 6 ist zur Befestigung an der zweiten Verbindungsseite 4 des Ventilblocks 2 bevorzugt zu einer Baugruppe zusammengebaut. Vor der Montage der Wegmesssystemeinheit 6 wird der zweite Federteller 13 sowie die zweite Zentrierfeder 10 auf die Verlängerung 11 aufgeschoben. Der zweite Federteller 13 kommt dabei mit einer zweiten Anschlagfläche 15 des Ventilblocks 2 sowie mit einer Stirnseite des Ventilkolbens 5 in Kontakt. Die Verlängerung 11 verläuft durch einen Innenraum der zweiten Zentrierfeder 10, die durch die Windungen der Zentrierfeder 10 gebildet werden hindurch. Die Wegmesssystemeinheit 6 wird auf den Signalgeber 20 sowie die Verlängerung 11 aufgeschoben. Dabei erstrecken sich Signalgeber 20 und Verlängerung 11 zumindest bereichsweise in das Druckrohr 19. Zwischen Wegmesssystembasis 16 und der zweiten Verbindungsseite 4 wird in die Stufe 64 ein Dichtelement eingelegt. Zur Zentrierung bzw. koaxialen Ausrichtung des Druckrohrs 19 mit dem Ventilkolben 5 sowie den anderen koaxial ausgerichteten Bauelementen befindet sich an der Wegmesssystembasis 16 ein Zentrierflansch 49, der mit einer Fläche der Aussparung 63 am Ventilblock 2 in Kontakt gelangt. Mittels des Zentrierflansches 45 wird das Dichtelement in der Stufe 64 vollständig umschlossen.

Zum Zusammenbau der Wegmesssystemeinheit 6 wird in die Druckrohrdurchführung 27 der Wegmesssystembasis 16 ein Druckrohr 19 eingepresst. Das Druckrohr 19 erstreckt sich damit durch die Druckrohrdurchführung 27 sowie durch die daran angrenzende Aufnahmeöffnung 17. Auf Grund des Einpressens ergibt sich eine Presspassung mittels derer eine fluiddichte Abdichtung erzeugt ist. Der Druckrohrflansch 26 steht mit dem Bund 24 der Wegmesssystembasis 16 in Kontakt. Auf das Druckrohr 19 wird nun ein Signalempfänger 18 aufgeschoben, der sich zylindrisch um das Druckrohr 19 erstreckt. Signalempfänger 18 und Druckrohr 19 liegen dabei koaxial zueinander. Dies führt auf einfache Weise zu einer optimalen Ausrichtung der einzelnen Bauelemente zueinander. Dies ist insbesondere für die genaue und einwandfreie Funktion der Wegmesssystemeinheit wichtig, um korrekte Messwerte liefern zu können.

Ein optionales Signalempfängergehäuse 21 (Fig. 4), welches über das Druckrohr 19 und den Signalempfänger 18 geschoben werden kann, erstreckt sich in die Aufnahmeöffnung 17 und stützt sich an der Wegmesssystembasis 16 ab. Alternativ kann das Signalempfängergehäuse 21 sich auch an der Stirnfläche des Wegmesssystemgehäuses 16 abstützen. Das Druckrohr 19 erstreckt sich dabei durch eine Öffnung des Wegmesssystemgehäuses, so dass ein Endbereich des Druckrohrs 19 über das Signalempfängergehäuse 21 hinausragt. Auf dem Bereich des Druckrohrs 19, der über das Signalempfängergehäuse 21 hinausragt, wird nun ein Befestigungselement 22 angebracht, welches eine Kraft FB auf das Signalempfängergehäuse 21 aufbringt. Das Signalempfängergehäuse 21 wird deshalb in Richtung der Kraft FB gegen die Wegmesssystembasis 16 gepresst.

Der genauen Abstimmung zwischen der Mittelstellung des Ventilkolbens 5 ("hydraulisch Null" bzw. "überdeckte Mittelstellung") und der Mittelstellung des magnetischen Aktuators, d. h. des Doppelhubmagneten, kommt eine besondere Bedeutung zu. Damit der Doppelhubmagnet in beide Bewegungsrichtungen R, L die gleichen Kräfte aufbringen kann, muss sich dieser in einer magnetischen Mittelposition, d.h. üblicherweise in der axialen Mitte der Ankeröffnung 41 befinden. Bevorzugt ist der Anker 28 dabei in der Mitte der Spulen 39, 40 positioniert. Als Mittelposition des Ventilkolbens 5 wird die Position des Ventilkolbens 5 bezeichnet, in der alle Hydraulikfluidkanäle 37 blockiert sind und kein oder nur ein sehr geringer Fluss an Hydraulikfluid durch das Hydraulikventil vorliegt. Üblicherweise ist die Mittelposition des Ventilkolbens 5 deshalb diejenige Position die der Ventilkolben 5 einnimmt wenn der Doppelhubmagnet stromlos ist und lediglich die erste und zweite Zentrierfeder 9, 10 Kräfte auf den Ventilkolben 5 ausüben. Mindestens einer der beiden Federteller 12, 13 hat in dieser Position sowohl Kontakt zur ersten oder zweiten Anschlagfläche 14, 15 als auch zu einer Stirnfläche des Ventilkolbens 5. Zur Funktion des Mehrwegehydraulikventils 1 ist es vorteilhaft, wenn sowohl der Ventilkolben 5 als auch der Anker 28 sich bei stromlosen Spulen 39, 40 in ihrer Mittelposition befinden. Dies wird mittels der Verbindungsstange 8 erreicht.

Hierzu sind an der Verbindungsstange 8 eine Endanschlagfläche 31 und ein Ventilkolbenanschlag 54 vorgesehen. Das Gewinde 53 am ersten Befestigungsbereich 50 der Verbindungsstange 8 wird in eine Stirnfläche des Ventilkolbens 5 eingeschraubt. Dabei gibt der Ventilkolbenanschlag 54 die maximale Einschraubposition an, bis zu dieser die Verbindungsstange 8 eingeschraubt wird. In der maximalen Einschraubposition kommt der Ventilkolbenanschlag 54 mit einer Stirnfläche des Ventilkolbens 5 in Kontakt. Am zweiten Befestigungsbereich 51 wird die Verbindungsstange 8 mittels des Gewindes 55 mit dem Anker 28 verbunden. Die Endanschlagfläche 31 kommt dabei in der maximalen Einschraubposition mit der Ringschulter 30 des Ankers 28 in Kontakt und definiert damit eindeutig die korrekte Montageposition. Die Endanschlagfläche 31 und der Ventilkolbenanschlag 54 sind benachbart zu Gewinden 53, 55 positioniert und sind bevorzugt als rechtwinklig zur Längsachse der Verbindungsstange verlaufende sprungartige Durchmesservergrößerungen der Verbindungsstange 8 ausgebildet.

Sind Ventilkolben 5 sowie Anker 28 an der Verbindungsstange montiert, so wird durch die Länge des stabförmigen Bereichs 52 sowie des ersten und zweiten Befestigungsbereichs 50, 51, welche zwischen dem Ventilkolbenanschlag 54 und der Endanschlagfläche 31 positioniert sind, der Abstand X zwischen Ventilkolben 5 und Anker 28 festgelegt. Der Abstand X wird deshalb derart gewählt, dass der Ventilkolben 5 sich in seiner Mittelposition befindet, wenn sich der Anker 28 in seiner Mittelposition befindet, und umgekehrt.

Im Falle des Ausfalls des Signalempfängers 18 besteht die Möglichkeit, diesen auf einfache Weise auszutauschen. Sofern ein Signalempfängergehäuse verbaut ist, wird das Befestigungselement 22 vom Endbereich des Druckrohrs 19 gelöst. Im Anschluss daran kann das Signalempfängergehäuse 21 vom Signalempfänger 18 und vom Druckrohr 19 abgezogen werden. Der nun freiliegende Signalempfänger 18 kann vom Druckrohr 19 abgenommen und repariert bzw. ausgetauscht werden. Folglich ist es deshalb nicht notwendig, für den Ausbau des Signalempfängers 18 die Wegmesssystemeinheit 6 zu demontieren bzw. die Wegmesssystembasis 16 vom Ventilblock 2 abzubauen. Die Stillstandszeiten können deshalb reduziert werden. Zudem bleiben alle mit Hydraulikfluid in Kontakt kommende Elemente geschlossen, so dass kein Hydraulikfluid austreten kann und keine Verunreinigung zu befürchten ist.

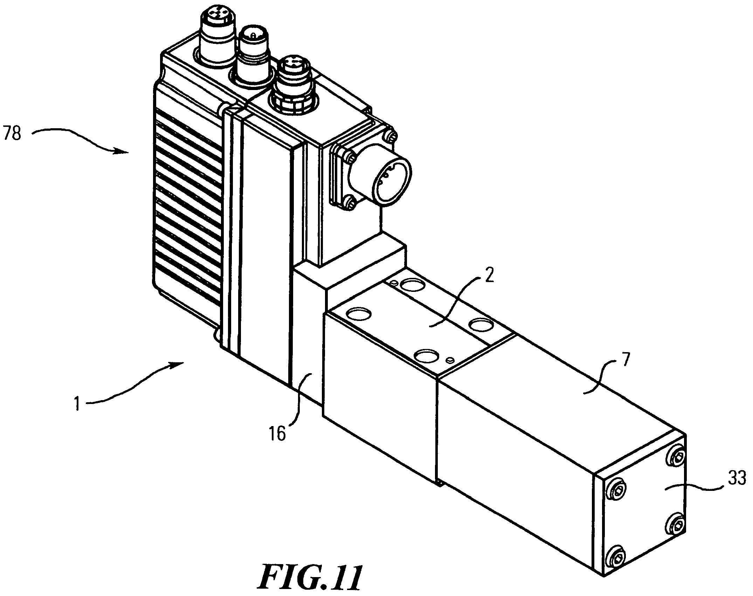

Lediglich in Fig. 11 gezeigt ist ein Elektronikgehäuse 78, welches am Mehrwegehydraulikventil angeordnet sein kann. Im Elektronikgehäuse 78 können alle für die Steuerung und Überwachung des Mehrwegehydraulikventils notwendigen elektronischen Komponenten untergebracht sein. Dabei werden in bekannter Weise Steuer- und Regelungsdaten über elektronische Ein- und Ausgänge weitergegeben. Das Elektronikgehäuse 78 kann sowohl an der Wegmesssystemeinheit 6, dem Ventilblock 2 oder der Doppelhubmagneteinheit 7 angeordnet sein. Bevorzugt schließt sich das Elektronikgehäuse 78 an die Wegmesssystemeinheit 6 an und ist deshalb von thermischen und elektromagnetischen Einflüssen entkoppelt. Bevorzugt ist diese Anordnung auch deswegen, da z.B. im Gegensatz zur Positionierung auf dem Doppelhubmagnetgehäuse keine oder geringere Vibrationen auftreten. Zudem kann auf ein gesondertes Signalempfängergehäuse 21 verzichtet werden.

Das Elektronikgehäuse weist Anschlüsse auf, die beispielsweise zur Verbindung der Elektronik mit einer Stromversorgungseinheit oder anderen elektronischen Komponenten dienen.

## Patentansprüche

1. Magnetbetätigtes Mehrwegehydraulikventil (1) mit Mittenzentrierung, umfassend einen Ventilblock (2) mit einer ersten Verbindungsseite (3) und einer am Ventilblock (2) gegenüberliegend angeordneten zweiten Verbindungsseite (4); einen im Ventilblock (2) verschiebbar geführten Ventilkolben (5); eine Wegmesssystemeinheit (6), zur Lagebestimmung des Ventilkolbens (5), und eine Doppelhubmagneteinheit (7), die am Ventilblock (2) an der ersten Verbindungsseite (3) angebracht ist, wobei die Doppelhubmagneteinheit (7) mittels einer Verbindungsstange (8) mit dem Ventilkolben (5) in Wirkkontakt steht und der Ventilkolben (5) mittels der Doppelhubmagneteinheit (7) sowohl in eine Richtung durch Bestromung einer ersten Spule (39) als auch in eine andere entgegengesetzte Richtung durch Bestromung einer zweiten Spule (40) aus einer Mittelstellung bewegbar ist; wobei die Mittenzentrierung eine erste Zentrierfeder (9), die sich mit einem Endbereich an der Doppelhubmagneteinheit (7) und mit einem anderen Endbereich am Ventilkolben (5) abstützt, sowie eine zweite Zentrierfeder (10) umfasst, wobei die Wegmesssystemeinheit (6) an der der Doppelhubmagneteinheit (7) gegenüberliegenden zweiten Verbindungsseite (4) am Ventilblock (2) angebracht ist und die zweite Zentrierfeder (10) sich mit einem Endbereich an der Wegmesssystemeinheit (6) und mit einem anderen Endbereich am Ventilkolben (5) abstützt, und sich eine Verlängerung (11) des Ventilkolbens (5) in die Wegmesssystemeinheit (6) hinein erstreckt und mit dieser in Wirkkontakt steht.

2. Magnetbetätigtes Mehrwegehydraulikventil (1) nach Anspruch 1, **dadurch gekennzeichnet, dass** ein erster Federteller (12) zwischen der ersten Zentrierfeder (9) und dem Ventilkolben (5) positioniert ist und ein zweiter Federteller (13) zwischen der zweiten Zentrierfeder (10) und dem Ventilkolben (5) positioniert ist.

3. Magnetbetätigtes Mehrwegehydraulikventil (1) nach Anspruch 2, **dadurch gekennzeichnet, dass** mindestens einer der ersten und zweiten Federteller (12, 13) in der Mittelstellung des Ventilkolbens (5) mit einer ersten und/oder zweiten Anschlagfläche (14, 15) des Ventilblocks (5) in Kontakt steht.

4. Magnetbetätigtes Mehrwegehydraulikventil (1) nach einem der vorhergehenden Ansprüche, **dadurch gekennzeichnet, dass** die Wegmesssystemeinheit (6) eine Wegmesssystembasis (16) mit einer Aufnahmeöffnung (17) aufweist, in der zumindest teilweise ein Signalempfänger (18) aufgenommen ist.

5. Magnetbetätigtes Mehrwegehydraulikventil (1) nach einem der vorhergehenden Ansprüche, **dadurch gekennzeichnet, dass** die Wegmesssystemeinheit (6) ein Druckrohr (19) umfasst, die Verlängerung (11) sich in das Druckrohr (19) hineinerstreckt und an der Verlängerung (11) ein Signalgeber (20) angeordnet ist, wobei sich der Signalgeber (20) in das Druckrohr (19) erstreckt.

6. Magnetbetätigtes Mehrwegehydraulikventil (1) nach Anspruch 5, **dadurch gekennzeichnet, dass** der Signalgeber (20) an einem Endbereich der Verlängerung (11) befestigt ist.

7. Magnetbetätigtes Mehrwegehydraulikventil (1) nach einem der Ansprüche 5 oder 6, **dadurch gekennzeichnet, dass** sich das Druckrohr (19) durch die Aufnahmeöffnung (17) der Wegmesssystembasis (16) erstreckt, und ein auf das Druckrohr (19) aufgeschobener Signalempfänger (18) mittels des Druckrohrs (19) in der Aufnahmeöffnung (17) zentriert ist.

8. Magnetbetätigtes Mehrwegehydraulikventil (1) nach Anspruch 7, **dadurch gekennzeichnet, dass** der auf das Druckrohr (19) aufgeschobene Signalempfänger (18) lösbar mit dem Druckrohr (19) verbunden ist.

9. Magnetbetätigtes Mehrwegehydraulikventil (1) nach einem der Ansprüche 4 bis 8, **dadurch gekennzeichnet, dass** die Wegmesssystembasis (16) an der der zweiten Verbindungsseite (4) des Ventilblocks (2) zugewandten Seite eine Anlagefläche (25) aufweist, die mit der zweiten Zentrierfeder (10) in Kontakt steht und sich an die Anlagefläche (25) ein Bund (24) für einen Druckrohrflansch (26) und eine sich durch den Bund (24) zur Aufnahmeöffnung (17) erstreckende Druckrohrdurchführung (27) anschließt.

10. Magnetbetätigtes Mehrwegehydraulikventil (1) nach einem der vorhergehenden Ansprüche, **dadurch gekennzeichnet, dass** die Doppelhubmagneteinheit (7) einen Anker aufweist, die Verbindungsstange (8) eine Endanschlagfläche (31) und einen Ventilkolbenanschlag (54) aufweist, die Endanschlagfläche (31) mit dem Anker (28) in Kontakt steht und der Ventilkolbenanschlag (54) mit dem Ventilkolben (5) in Kontakt steht, wobei ein Abstand (X) zwischen Endanschlagfläche (31) und Ventilkolbenanschlag (54) derart gewählt ist, dass sich der Anker (28) in einer Mittelposition befindet wenn sich auch der Ventilkolben (5) in einer Mittelposition befindet, und umgekehrt.

11. Magnetbetätigtes Mehrwegehydraulikventil (1) nach einem der vorhergehenden Ansprüche, **dadurch gekennzeichnet, dass** der Anker (28) mit der Verbindungsstange (8) verbunden ist, sich eine Durchführungsöffnung (29.1, 29.2) vollständig durch den Anker (28) erstreckt, die Verbindungsstange (8) sich zumindest bereichsweise in die Durchführungsöffnung (29.1, 29.1) erstreckt und die Verbindungsstange (8) an einem Endbereich mit dem Anker (28) verbunden ist.

12. Magnetbetätigtes Mehrwegehydraulikventil (1) nach Anspruch 11, **dadurch gekennzeichnet, dass** ein Befestigungselement (34) an der dem Ventilblock (2) abgewandten Seite des Ankers (28) angeordnet ist, welches den Anker (28) und die Verbindungsstange (8) lösbar verbindet.

13. Magnetbetätigtes Mehrwegehydraulikventil (1) nach Anspruch 12, **dadurch gekennzeichnet, dass** die Doppelhubmagneteinheit (7) ein Doppelhubmagnetgehäuse (79) mit einem stirnseitig lösbar angeordneten Verschlusselement (33) aufweist, mittels welchem das am Anker (28) angeordnete Befestigungselement (34) zugänglich ist.

14. Magnetbetätigtes Mehrwegehydraulikventil (1) nach Anspruch 11 bis 13, **dadurch gekennzeichnet, dass** die Durchführungsöffnung (29.1, 29.2) eine Ringschulter (30) aufweist und der Endbereich der Verbindungsstange (8) der sich in die Durchführungsöffnung (29.1, 29.2) erstreckt, die Endanschlagfläche (31) aufweist, und Endanschlagfläche (31) und Ringschulter (30) miteinander in Kontakt stehen.

15. Verfahren zur Montage eines magnetbetätigten Mehrwegehydraulikventils (1) mit Mittenzentrierung nach einem der vorhergehenden Ansprüche, umfassend die Schritte:
Befestigen einer Verbindungsstange (8) und einer Verlängerung (11) am Ventilkolben (5),
Einbringen des Ventilkolbens (5) in den Ventilblock (2),
Aufschieben einer ersten Zentrierfeder (31) auf die Verbindungsstange (8),
Aufschieben eines Doppelhubmagnetgehäuses (79) auf die Verbindungsstange (8) und Befestigen des Doppelhubmagnetgehäuses (79) an einer ersten Verbindungsseite (3) des Ventilblocks (2),
Aufschieben des Ankers (28) auf die Verbindungsstange (8), wobei sich die Verbindungsstange (8) zumindest mit einem Endbereich in eine Durchführungsöffnung (29.1, 29.1) des Ankers (28) erstreckt,
Befestigen der Verbindungsstange (8) am Anker (28),
Verschließen des Doppelhubmagnetgehäuses (79) mit einem Verschlusselement (33).

## Claims

1. Magnetically operated multidirectional hydraulic valve (1) with hub centering, comprising a valve block (2) with a first connecting side (3) and a second connecting side (4) disposed on the opposite side of the valve block (2); a valve plunger (5) guided movably in the valve block (2); a displacement measuring system unit (6) for determining the position of the valve plunger (5), and a reciprocating magnetic unit (7) attached on the valve block (2) on the first connecting side (3), wherein the reciprocating magnetic unit (7) is in operative contact over a connecting rod (8) with the valve plunger (5) and the valve plunger (5) can be moved from the middle position by means of the reciprocating magnetic unit (7) both in one direction by energizing a first coil (39) and in a different, opposite direction by energizing a second coil (40); wherein the hub centering comprises a first centering spring (9) braced with one end region on the reciprocating magnetic unit (7) and another end region on the valve plunger (5), and a second centering spring (10), wherein the displacement measuring system unit (6) is attached to the valve block (2) on the second connecting side (4) located opposite the reciprocating magnetic unit (7) and the second centering spring (10) is braced with one end region on the displacement measuring system unit (6) and with another end region on the valve plunger (5), and an extension (11) of the valve plunger (5) extends into the displacement measuring system unit (6) and is in operative contact with it.

2. Magnetically operated multidirectional hydraulic valve (1) according to claim 1, **characterized in that** a first valve spring seat (12) is positioned between the first centering spring (9) and the valve plunger (5) and a second valve spring seat (13) is positioned between the second centering spring (10) and the valve plunger (5).

3. Magnetically operated multidirectional hydraulic valve (1) according to claim 2, **characterized in that** at least one of the first and second valve spring seats (12, 13) in the middle position of the valve plunger (5) is in contact with a first and/or second stop surface (14, 15) of the valve block (5).

4. Magnetically operated multidirectional hydraulic valve (1) according to any one of the preceding claims, **characterized in that** the displacement measuring system unit (6) has a displacement measuring system base (16) with a receiving opening (17) in which a signal receiver (18) is at least partially accommodated.

5. Magnetically operated multidirectional hydraulic valve (1) according to any one of the preceding claims, **characterized in that** the displacement measuring system unit (6) comprises a pressure pipe (19), the extension (11) extends into the pressure pipe (19) and a signal generator (20) is located on the extension (11), wherein the signal generator (20) extends into the pressure pipe (19).

6. Magnetically operated multidirectional hydraulic valve (1) according to claim 5, **characterized in that** the signal generator (20) is fastened to an end region of the extension (11).

7. Magnetically operated multidirectional hydraulic valve (1) according to either one of claims 5 or 6, **characterized in that** the pressure pipe (19) extends through the receiving opening (17) of the displacement measuring system base (16) and a signal receiver (18) slid onto the pressure pipe (19) is centered in the receiving opening (17) by means of the pressure pipe (19).

8. Magnetically operated multidirectional hydraulic valve (1) according to claim 7, **characterized in that** the signal receiver (18) slid onto the pressure pipe (19) is connected removably to the pressure pipe (19).

9. Magnetically operated multidirectional hydraulic valve (1) according to any one of claims 4 to 8, **characterized in that** the displacement measuring system base (16) on its side facing the second connecting side (4) of the valve block (2) has a contact surface (25) that is in contact with the second centering spring (10) and at the contact surface (25) connects a collar (24) for a pressure pipe flange (26) and a pressure pipe passage (27) extending through the collar (24) to the receiving opening (17).

10. Magnetically operated multidirectional hydraulic valve (1) according to any one of the preceding claims, **characterized in that** the reciprocating magnetic unit (7) has an armature, the connecting rod (8) has a limit stop surface (31) and a valve plunger stay (54), the limit stop surface (31) is in contact with the armature (28) and the valve plunger stay (54) is in contact with the valve plunger (5), wherein a distance (X) between limit stop surface (31) and valve plunger stay (54) is selected such that the armature (28) is located in a central position when the valve plunger (5) is also in a central position, and vice-versa.

11. Magnetically operated multidirectional hydraulic valve (1) according to any one of the preceding claims, **characterized in that** the armature (28) is connected to the connecting rod (8), a passage opening (29.1, 29.2) extends through the armature (28), the connecting rod (8) extends into the passage opening (29.1, 29.2) at least in one area, and the connecting rod (8) is connected at an end area with the armature (28).

12. Magnetically operated multidirectional hydraulic valve (1) according to claim 11, **characterized in that** a fastening element (34) is arranged on the side of the armature (28) facing away from the valve block (2) and detachably connecting the armature (28) and the connecting rod (8).

13. Magnetically operated multidirectional hydraulic valve (1) according to claim 12, **characterized in that** the reciprocating magnetic unit (7) has a reciprocating magnet housing (79) with a closing element (33) detachably arranged on the face by means of which the fastening element (34) located on the armature (28) is accessible.

14. Magnetically operated multidirectional hydraulic valve (1) according to claims 11 to 13, **characterized in that** the passage opening (29.1, 29.2) has an annular shoulder (30) and the end area of the connecting rod (8) that extends into the passage opening (29.1, 29.2) has the limit stop surface (31), and the limit stop surface (31) and the annular shoulder (30) are in contact with one another.

15. Method for assembling a magnetically operated multidirectional hydraulic valve (1) with hub centering according to any one of the preceding claims, comprising the steps:
fastening a connecting rod (8) and an extension (11) to the piston plunger (5),
introducing the piston plunger (5) into the valve block (2),
sliding a first centering spring (31) onto the connecting rod (8),
sliding a reciprocating magnet housing (79) onto the connecting rod (8) and fastening the reciprocating magnet housing (79) onto a first connecting side (3) of the valve block (2),
sliding the armature (28) onto the connecting rod (8), wherein the connecting rod (8) extends with at least one end region into a passage opening (29.1, 29.2) of the armature (28),
fastening the connecting rod (8) onto the armature (28),
closing the reciprocating magnet housing (79) with a closing element (33).

## Revendications

1. Soupape hydraulique multivoies à actionnement magnétique (1) avec centrage central, comprenant un bloc de soupape (2) avec un premier côté de raccordement (3) et un deuxième côté de raccordement (4) agencé à l'opposé sur le bloc de soupape (2) ; un piston de soupape (5) guidé de manière à pouvoir être déplacé dans le bloc de soupape (2), une unité système de mesure de course (6) pour déterminer la position du piston de soupape (5) et une unité magnétique à double course (7) placée sur le bloc de soupape (2) au niveau du premier côté de raccordement (3), dans laquelle l'unité magnétique à double course (7) est située en contact actif avec le piston de soupape (5) au moyen d'une barre de raccordement (8) et le piston de soupape (5), au moyen de l'unité magnétique à double course (7), est mobile depuis une position centrale aussi bien dans une direction guidée par l'alimentation en énergie d'une première bobine (39) que dans une autre direction opposée guidée par l'alimentation d'une deuxième bobine (40) ; dans laquelle le centrage central comprend un premier ressort de centrage (9), qui s'appuie au niveau d'une première zone d'extrémité sur l'unité magnétique à double course (7) et au niveau d'une autre zone d'extrémité sur le piston de soupape (5), ainsi qu'un second ressort de centrage (10), dans laquelle l'unité système de mesure de course (6) est placée sur le bloc de soupape (2) au niveau du deuxième côté de raccordement (4) opposé à l'unité magnétique à double course (7) et le deuxième ressort de centrage (10) s'appuie au niveau d'une première zone d'extrémité sur l'unité système de mesure de course (6) et au niveau d'une autre zone d'extrémité sur le piston de soupape (5) et une prolongation (11) du piston de soupape (5) s'étend à l'intérieur de l'unité système de mesure de course (6) et est en contact actif avec celle-ci.

2. Soupape hydraulique multivoies à actionnement magnétique (1) selon la revendication 1, **caractérisée en ce qu'**une première coupelle de ressort (12) est positionnée entre le premier ressort de centrage (9) et le piston de soupape (5) et une deuxième coupelle de ressort (13) est positionnée entre le deuxième ressort de centrage (10) et le piston de soupape (5).

3. Soupape hydraulique multivoies à actionnement magnétique (1) selon la revendication 2, **caractérisée en ce qu'**au moins une coupelle parmi la première et la seconde coupelle de ressort (12, 13) est en contact, dans la position centrale du piston de soupape (5) avec une première et/ou une seconde surface de butée (14, 15) du bloc de soupape (5).

4. Soupape hydraulique multivoies à actionnement magnétique (1) selon l'une des revendications précédentes, **caractérisée en ce que** l'unité système de mesure de course (6) présente une base de système de mesure de course (16) avec une ouverture de réception (17), dans laquelle un récepteur de signal (18) est reçu au moins partiellement.

5. Soupape hydraulique multivoies à actionnement magnétique (1) selon l'une des revendications précédentes, **caractérisée en ce que** l'unité système de mesure de course (6) comprend un tube de pression (19), la prolongation (11) s'étend à l'intérieur du tube de pression (19) et un générateur de signal (20) est agencé sur la prolongation (11), dans laquelle le générateur de signal (20) s'étend dans le tube de pression (19).

6. Soupape hydraulique multivoies à actionnement magnétique (1) selon la revendication 5, **caractérisée en ce que** le générateur de signal (20) est fixé au niveau d'une zone d'extrémité de la prolongation (11).

7. Soupape hydraulique multivoies à actionnement magnétique (1) selon une des revendications 5 ou 6, **caractérisée en ce que** le tube de pression (19) s'étend à travers l'ouverture de réception (17) de la base du système de mesure de course (16) et un récepteur de signal (18) remis sur le tube de pression (19) est centré au moyen du tube de pression (19) dans l'ouverture de réception (17).

8. Soupape hydraulique multivoies à actionnement magnétique (1) selon la revendication 7, **caractérisée en ce que** le récepteur de signal (18) remis sur le tube de pression (19) est raccordé de façon libérable au tube de pression (19).

9. Soupape hydraulique multivoies à actionnement magnétique (1) selon une des revendications 4 à 8, **caractérisée en ce que** la base de système de mesure de course (16) présente une surface d'appui (25) sur le côté faisant face au deuxième côté de raccordement (4) du bloc de soupape (2), qui est en contact avec le deuxième ressort de centrage (10) et une collerette (24) pour une bride de tube de pression (26) et une pénétration de tube de pression (27) s'étendant à travers la collerette jusqu'à l'ouverture de réception (17) se raccorde sur la surface d'appui (25).

10. Soupape hydraulique multivoies à actionnement magnétique (1) selon l'une des revendications précédentes, **caractérisée en ce que** l'unité magnétique à double course (7) présente un ancrage, la barre de raccordement (8) présente une surface de butée terminale (31) et une butée de piston de soupape (54), la surface de butée terminale (31) est en contact avec l'ancrage (28) et la butée de piston de soupape (54) est en contact avec le piston de soupape (5), dans laquelle une distance (X) entre la surface de butée terminale (31) et la butée de piston de soupape (54) est choisie de telle sorte que l'ancrage (28) se trouve dans une position centrale lorsque le piston de soupape (5) se trouve également dans une position centrale et inversement.

11. Soupape hydraulique multivoies à actionnement magnétique (1) selon l'une des revendications précédentes, **caractérisée en ce que** l'ancrage (28) est raccordé à la barre de raccordement (8) une ouverture de pénétration (29.1, 29.2) s'étend totalement à travers l'ancrage (28), la barre de raccordement (8) s'étend au moins par endroit dans l'ouverture de pénétration (29.1, 29.1) et la barre de raccordement (8) est raccordée à l'ancrage (28) au niveau d'une zone d'extrémité.

12. Soupape hydraulique multivoies à actionnement magnétique (1) selon la revendication 11, **caractérisée en ce qu'**un élément de fixation (34) est agencé sur le côté opposé au bloc de soupape (2) de l'ancrage (28), qui raccorde l'ancrage (28) et la barre de raccordement (8) de façon libérable.

13. Soupape hydraulique multivoies à actionnement magnétique (1) selon la revendication 12, **caractérisée en ce que** l'unité magnétique à double course (7) présente un boîtier magnétique à double course (79) avec un élément de fermeture (33), agencé de façon libérable du côté avant, au moyen duquel l'élément de fixation (34) agencé sur l'ancrage (28) est accessible.

14. Soupape hydraulique multivoies à actionnement magnétique (1) selon les revendications 11 à 13, **caractérisée en ce que** l'ouverture de pénétration (29.1, 29.2) présente un épaulement annulaire (30) et la zone d'extrémité de la barre de raccordement (8) qui s'étend dans l'ouverture de pénétration (29.1, 29.2) présente la surface de butée terminale (31) et la surface de butée terminale (31) et l'épaulement annulaire (30) sont en contact l'un avec l'autre.

15. Procédé de montage d'une soupape hydraulique multivoies à actionnement magnétique (1) avec centrage central selon l'une des revendications précédentes, comprenant les étapes consistant à :
fixer une barre de raccordement (8) et une prolongation (11) sur le piston de soupape (5),
introduire le piston de soupape (5) dans le bloc de soupape (2),
remettre un premier ressort de centrage (31) sur la barre de raccordement (8),
remettre un boîtier magnétique à double course (79) sur la barre de raccordement (8) et fixer le boîtier magnétique à double course (79) sur un premier côté de raccordement (3) du bloc de soupape (2),
remettre l'ancrage (28) sur la barre de raccordement (8), où la barre de raccordement (8) s'étend au moins avec une zone d'extrémité dans une ouverture de pénétration (29.1, 29.1) de l'ancrage (28),
fixer la barre de raccordement (8) sur l'ancrage (28),
fermer le boîtier magnétique à double course (79) avec un élément de fermeture (33).
